# NEUE EUROPÄISCHE PATENTSCHRIFT

(11) **EP 0 912 284 B2**
(45) Veröffentlichungstag und Bekanntmachung des Hinweises auf die Entscheidung über den Einspruch: **04.03.2009**
(45) Hinweis auf die Patenterteilung: 30.01.2002
(21) Anmeldenummer: 97930459.9
(22) Anmeldetag: 01.07.1997
(51) Int. Cl.: B23C 3/06

(54) **FRÄSMASCHINE**
MILLING MACHINE
FRAISEUSE

(30) Priorität: 02.07.1996 DE 19626627
(43) Veröffentlichungstag der Anmeldung: 06.05.1999
(73) Patentinhaber: BOEHRINGER WERKZEUGMASCHINEN GmbH, D-73033 Göppingen (DE)
(72) Erfinder: SANTORIUS, Rolf, D-73066 Uhingen-Nassachmühle (DE); SCHARPF, Paul, Dieter, D-73114 Schlat (DE); VOSS, Wolf-Dietrich, D-73087 Boll (DE); KOHLHASE, Matthias, D-78713 Schramberg-Sulgen (DE); KIEFER, Herbert, D-78256 Steisslingen (DE); SCHREIBER, Leo, D-73529 Schwäbisch Gmünd (DE)
(74) Vertreter: Alber, Norbert
(86) Internationale Anmeldenummer: PCT/EP1997/003419
(87) Internationale Veröffentlichungsnummer: WO 1998/000262

(56) Entgegenhaltungen:
- EP-A- 0 018 000
- EP-A- 0 720 883
- WO-A-96/39269
- WO-A-97/21513
- AT-B- 351 890
- DE-A- 2 654 949
- DE-A- 3 516 100
- DE-A- 4 329 610
- DE-A- 19 546 196
- DE-C- 19 546 197
- Modern Metal Cutting A Practical Handbook, Sandvik Coromant 1994, ISBN 91-97 22 99-0-3
- "Rundfräsen mit Hartmetallwerkzeugen", Schweizer Maschinenmarkt, Nr. 19, 56. Jahrgang, S. 27 bis 40, Goldach/SG, 1956
- "Höhere Sphären", Maschinenmarkt, Nr. 101, S. 46 bis 49, Würzburg, 1995

## Beschreibung

### I. Anwendungsgebiet

Die Erfindung betrifft Fräsmaschinen, mit welchen auch exzentrische Stirnflächen und Umfangsflächen, z. B. Mantelflächen, bearbeitet werden können, siehe die unter Art. 54(3) EPÜ fallende WO 96/39 269.

Ein typisches Werkstück mit solchen Flächen ist eine Kurbelwelle, weshalb im folgenden immer von der Kurbelwelle gesprochen wird, ohne die möglichen Werkstücke hierauf zu beschränken.

### II. Technischer Hintergrund

Bei Kurbelwellen ist die spanende Bearbeitung sowohl mit Außenfräsmaschinen als auch mit Innenfräsmaschinen, also mittels eines ringförmig die Kurbelwelle umschließenden, nach innen gerichtete Zähne aufweisenden, Fräsers, bekannt. Die Rotationsachse des Fräsers liegt dabei parallel zur Längsachse der Kurbelwelle.

Die Kurbelwelle wird dabei an ihren stirnseitigen Enden, also auf der einen Seiten an ihrem Endflansch und auf der anderen Seite an ihrem Endzapfen zentrisch, also auf der Mittelachse ihrer Mittellager, beiderseits in Spannfuttern gehalten.

Bei einer bekannten Lösung steht die Kurbelwelle während der Bearbeitung still, die Spannfutter sind also nicht von einem Spindelstock angetrieben. Für die Bearbeitung der Hublagerzapfen rotiert der ringförmige Innenfräser einerseits um seinen eigenen Mittelpunkt zur Erzeugung der Schnittgeschwindigkeit, und andererseits auf einer Kreisbahn um die Mitte des zu bearbeitenden Hublagerzapfens, um dessen Mantelfläche zu fräsen. Auch Wangenstirnflächen und Wangenumfangsflächen können auf diese Art und Weise bearbeitet werden, sofern der Krümmungsradius kleiner ist als der Radius des Flugkreises der Schneiden des Innenfräsers. Der Innenfräser ist bei stillstehender Kurbelwelle in X- und in Y-Richtung definiert verfahrbar.

Die den Innenfräser ringförmig umschließende Lagerung ist sehr stabil, baut jedoch in der Z-Richtung relativ breit, weshalb bei kurzen Kurbelwellen der gleichzeitige Einsatz von zwei Innenfräsern axial beabstandet an der gleichen Kurbelwelle problematisch werden kann.

Dabei ist es auch bekannt, während der Bearbeitung die Kurbelwelle langsam zu drehen, also wenigstens eines der Spannfutter mittels eines Spindelstockes definiert antreiben und in der Drehlage positionieren zu können. Durch diese Realisierung der C-Achse für das Werkstück kann beim Werkzeugsupport auf die Bewegung in Y-Richtung verzichtet werden, so daß also nur der Werkzeugsupport für den Innenfräser lediglich ein Unterschlitten zum Bewegen in Z-Richtung und einen Oberschlitten zur Bewegung in X-Richtung umfaßt.

Es sind ferner Außenfräsmaschinen bekannt, bei denen die Fräseinheiten - neben der Verfahrbarkeit in Z-Richtung - in X-Richtung definiert verfahrbar waren, und die Spannfutter für die Kurbelwelle in einem bzw. zwei Spindelstöcken aufgenommen waren. Durch die Realisierung der C-Achse am Werkstück wurde der Außenfräser in X-Richtung bei der Bearbeitung von exzentrischen Flächen definiert nachgeführt. Bei der Bearbeitung von exzentrischen Flächen waren jedoch keine zwei oder mehr unabhängig voneinander arbeitenden Außenfräs-Einheiten an der gleichen Kurbelwelle im Einsatz. Dies war nur bei der Bearbeitung der zentrischen Flächen, z. B. der Mittellagerzapfen, möglich.

Bei den bekannten Fräsmaschinen wird mit konventioneller, negativer Schneidengeometrie und Schnittgeschwindigkeiten bei Werkstücken aus Grauguß (GGG60 - GGG80) von maximal 160 m/min gearbeitet. Dadurch werden sehr hohe Schnittkräfte in das Werkstück eingebracht, weshalb in der Regel auch eine Mittenabstützung des Werkstückes durch Lünetten etc. erforderlich ist. Ein weiterer Nachteil bestand darin, daß ein hoher Anteil der Prozeßwärme sowohl in das Werkstück, also auch in das Werkzeug eingeleitet wurde, und nur ein geringer Anteil über die Späne abgeführt wurde.

### III. Darstellung der Erfindung

### a) Technische Aufgabe

Es ist daher die Aufgabe gemäß der Erfindung, eine Fräsmaschine zur Bearbeitung auch exzentrischer Stirnflächen und Umfangsflächen zu schaffen, die trotz einfachem Aufbau eine kurze Bearbeitungszeit gewährleistet.

### b) Lösung der Aufgabe

Diese Aufgabe wird durch die kennzeichnenden Merkmale des Anspruches 1 gelöst. Vorteilhafte Ausführungsformen ergeben sich aus den Unteransprüchen.

Durch die C-Achse des Werkstückes und die damit mögliche definierte, jedoch relativ langsame Drehung des Werkstückes von meist weniger als 60 Umdrehungen/Minute, oft nur 15 - 20 Umdrehungen/Minute, ist es ausreichend, daß die Werkzeugsupporte das Werkzeug, meist einen Außenfräser, außer in der Z-Richtung nur noch in der X-Richtung definiert verfahren können muß.

Die Drehung des Werkstückes ist dabei so langsam, daß eventuelle vorhandene Unwuchten des Werkstückes sich noch nicht dynamisch nachteilig auf das Bearbeitungsergebnis auswirken.

### c) Vorteile

Die kurze Bearbeitungszeit wird dadurch erzielt, daß trotz der Drehung des Werkstückes, z. B. der Kurbelwelle, zwei Werkzeugeinheiten unabhängig voneinander an hinsichtlich ihrer Drehlage nicht übereinstimmenden exzentrischen Flächen arbeiten können, was nur durch eine Maschinensteuerung möglich ist, die die unabhängigen Werkzeugsupporte in Abhängigkeit der Position und Drehung des Werkstückes steuert, wobei vorzugsweise Optimierungsziele wie z. B. die Spandicke oder die Schnittgeschwindigkeit vorgebbar sind.

Dabei kann für ein bestimmtes Werkstück bereits vor der Bearbeitung für jeden Zeitpunkt der Bearbeitung Drehlage, Bewegungsrichtung und Geschwindigkeit des Werkstückes, Drehgeschwindigkeit der Fräser, X-Position und Bewegungsrichtung sowie Bewegungsgeschwindigkeit der Fräser etc. berechnet und in einem Arbeitsprogramm z. B. als Wertetabelle für verschiedene Zustände der Bearbeitung abgelegt werden, welches dann von der Maschinensteuerung durchlaufen wird.

Erfindungsgemäß wird die aktuelle Ist-Lage und Ist-Bewegung des Werkstückes während der Bearbeitung zeitgleich berücksichtigt und in Abhängigkeit hiervon werden die Werkzeugsupporte gesteuert. Dies ist jedoch hinsichtlich der Sensorik und des Steuerungsaufwandes wesentlich aufwendiger.

Durch die relativ geringe Drehzahl des Werkstückes sind Schleppfehler, also Abweichungen zwischen Soll- und Ist-Zustand, bei der Bewegung des Werkstückes relativ gering.

Um dies auch auf der Werkzeugseite zu erreichen, ist z. B. bei Verwendung eines Scheibenfräsers der Scheibendurchmesser größer ausgebildet als es für die Eintauchtiefe zum Fräsen des Hublagers einer Kurbelwelle notwendig wäre. Diese Vergrößerung des Scheibenfräsers ergibt eine ebenfalls relativ niedrige Drehzahl des Fräsers, so daß auch die Drehzahl des Werkzeuges mit nur vernachlässigbar geringen Schleppfehlern ständig verändert werden kann.

Für die Bearbeitung einer Pkw-Kurbelwelle mit 10 - 15 cm Hub ist der Durchmesser eines hierfür verwendeten Scheibenfräsers etwa 800 mm. Dies ergibt auch thermische Vorteile, da zwischen zwei aufeinanderfolgenden Einsätzen ein und derselben Schneide des Fräsers diesem eine relativ lange Zeit für die Abkühlung zur Verfügung steht.

Bei Verwendung entsprechender Schneidstoffe und Schneidengeometrie können Schnittgeschwindigkeiten von 800 m/min und auch noch deutlich darüber erzielt werden, und zusätzlich benötigt die Maschine kein Kühl-Schmiermittel an der Bearbeitungsstelle, da trocken gefräst werden kann, insbesondere bei positiver Schneidengeometrie.

Anstelle einer Linearbewegung des Fräsers in X-Richtung ist auch ein Verschwenken des Fräsers um eine Achse parallel zur Z-Achse möglich, was insbesondere bei Verwendung eines Fingerfräsers notwendig ist, dessen Rotationsachse senkrecht zur Längsachse der Kurbelwelle angeordnet ist. Ein derartiger Fingerfräser bearbeitet mit den Schneiden an seiner vorderen Stirnfläche Umfangsflächen, also z. B. die Mantelflächen der Hublagerzapfen einer Kurbelwelle, und mit den Schneiden auf seiner Umfangsfläche die Seitenflächen, beispielsweise die Wangenstirnflächen.

Die Verwendung eines Scheibenfräsers, bei dem also Schneiden an seinem Umfangsbereich und/oder im Übergangsbereich zwischen der Umfangsfläche und der Stirnfläche des scheibenförmigen Grundkörpers angeordnet sind, ist gegenüber einem Innenfräser zu bevorzugen, da selbst bei einer Breite des Scheibenfräsers in Z-Richtung von nur etwa 20 - 25 mm und einem Durchmesser von ca. 800 mm ein solcher Scheibenfräser ausreichend stabil ist, um nur einseitig fliegend gelagert zu werden. Bei Einsatz von zwei Scheibenfräsern, die von der gleichen Seite her am Werkstück angreifen, jedoch axial beabstandet sind, können diese beiden Scheibenfräser somit auf voneinander abgewandten Seiten an ihrem jeweiligen Support antreibbar gelagert sein, so daß diese beiden Scheibenfräser in axialer Richtung theoretisch soweit aneinander angenähert werden können, bis sich ihre Schneiden stirnseitig berühren.

Bei einem entlang des Außenumfanges umschlossenen und gelagerten Innenfräsers ist eine in Z-Richtung derart schmale Ausbildung und starke gegenseitige Annäherung zweier Fräseinheiten nicht möglich.

Darüber hinaus sind scheibenförmige Außenfräser leichter zu bestücken, auch zu justieren und auszuwechseln, was unter dem Aspekt, daß bei den heute möglichen Verfahren die Nebenzeiten und Totzeiten einer Maschine gegenüber der Einsatzzeiten immer stärker ins Gewicht fallen, ein ganz wesentlicher Faktor ist.

Die Schneiden bei derartigen Fräsern sind entlang des Umfanges üblicherweise als aufgeschraubte Wendeschneidplatten realisiert. Dabei werden grundsätzlich drei verschiedene Schneidplatten hinsichtlich ihres Einsatzzweckes unterschieden: die sogenannte Wangenplatte bearbeitet Stirnflächen, also beispielsweise Wangenseitenflächen, die sogenannte Zapfenplatte bearbeitet Umfangsflächen, also beispielsweise die Mantelfläche eines Lagerzapfens einer Kurbelwelle oder die Außenumfangskontur einer Wange, wobei als Mantelfläche jede beliebig konvex gekrümmte Kontur als auch Ebene, beispielsweise tangential zur Z-Achse angeordnete Flächen und sogar konkave Flächen in Frage kommen, sofern deren Krümmungsradius größer ist als der Radius des verwendeten Scheibenfräsers. Gerade das Fräsen von ebenen Flächen als Befestigungsfläche für Zusatzgewichte oder für Wuchtarbeiten ist ein großer Vorteil des Außenfräsens geger über dem Innenfräsen.

Weiterhin sind für das Erstellen des sogenannten Unterstichs, also eines Einstichs am Übergang zwischen der Mantelfläche des Zapfens und der stirnseitigen Wangenseitenfläche, spezielle Unterstich-Platten vorhanden.

Auf einem Scheibenfräser können beispielsweise nur Zapfenplatten angeordnet sein, was die Möglichkeit gibt, einen solchen Scheibenfräser zusätzlich auch definiert während der Bearbeitung in Z-Richtung zu verfahren, und damit Lagerzapfen von nahezu beliebiger Breite mit einem schmalen Scheibenfräser ohne ringförmig umlaufende Bearbeitungsabsätze fräsen zu können. In diesem Fall muß der Unterstich von einem separaten Fräser erstellt werden.

Eine andere Möglichkeit besteht darin, an dem die Zapfenplatten tragenden Fräser an einer Umfangskante oder gar an beiden Umfangskanten die Unterstichplatten direkt mit anzuordnen, und den Unterstich damit zusammen mit der Mantelfläche des Zapfens zu fräsen. Bei Anordnung der beiderseitigen Unterstichplatten auf einem Fräser entspricht der Fräser der fertigen axialen Länge der Lagerstelle, also nur einem bestimmten zu fertigenden Werkstück. Wird für den linken Unterstich und die linke Hälfte der Mantelfläche des Zapfens ein Fräser und für die rechte Teilhälfte der Zapfenfläche ein anderer Fräser verwendet, können variable Lagerbreiten in Z-Richtung mit ein und demselben Paar von Scheibenfräsern durch variable Überschneidung in der Mitte hergestellt werden.

Die Wangenplatten sind meist auf einem separaten Scheibenfräser angeordnet, und hierbei vorzugsweise wiederum an beiden Stirnflächen des Scheibenfräsers, um sowohl in +Z als auch in Z-Richtung gerichtete Seitenflächen bearbeiten zu können. Die Anordnung auf einem separaten Scheibenfräser ist sinnvoll, da entlang der Wangenseitenflächen vergleichsweise hohe Volumina abzuspanen sind und damit diese Wangenplatten schneller verschleißen als z. B. die Zapfenplatten oder Unterstichplatten.

Die erfindungsgemäße Fräsmaschine kann beispielsweise nur zwei unabhängig voneinander bewegbare Fräseinheiten umfassen, die etwa von der gleichen Seite her, lediglich axial beabstandet, an der Kurbelwelle arbeiten. In der Regel wird die Bewegung in X-Richtung schräg von oben her oder gar senkrecht gegen die Kurbelwelle gerichtet sein, indem entweder bereits das Bett der Fräsmaschine selbst entweder schräg oder steil gestellt ist oder zumindest die Querführung, entlang welcher der Oberschlitten auf dem Unterschlitten des Werkzeugsupportes läuft.

Wenn in diesen Fällen zusätzlich in Z-Richtung beabstandet hintereinander mehrere Werkzeugsupporte angeordnet sind, können auch vier oder gar mehr Werkzeugeinheiten gleichzeitig an ein und demselben Werkstück arbeiten.

Zusätzlich kann eine einzige Werkzeugeinheit ein Mehrfachwerkzeug, also z. B. zwei in Z-Richtung beabstandete, aber nur synchron miteinander bewegbare Scheibenfräser, beispielsweise als Tandemwerkzeug, aufweisen. Dies ist insbesondere sinnvoll, wenn die zu bearbeitende Kurbelwelle zwei fluchtend analog ausgerichtete Hublagerzapfen aufweist wie beispielsweise die Kurbelwellen von Vierzylinder-Reihenmotoren. Da derartige Mehrfachwerkzeuge jedoch hinsichtlich ihrer Querbewegung und Drehung gekoppelt sind, sind sie nur als eine einzelne Werkzeugeinheit zu betrachten.

Bei dem beidseitigen Antrieb der in den Spannfuttern gehaltenen Kurbelwelle sind die beiderseitigen Spindelantriebe vorzugsweise elektrisch synchronisiert.

Selbst bei Bearbeitung des Werkstückes anhand eines vor der Bearbeitung errechneten und in der Maschinensteuerung abgelegten Bearbeitungsprogrammes kann dieses Bearbeitungsprogramm aufgrund der Vermessung der ersten gefertigten Teile nachträglich korrigiert werden:

Bekanntermaßen ist trotz Bearbeitung einer exakten Zylinderfläche aufgrund der Auslenkung der Kurbelwelle in Querrichtung durch die Schnittkräfte das Bearbeitungsergebnis in der Praxis leicht unrund. Dies versucht man zu kompensieren, indem eine theoretisch unrunde Kontur gefräst wird, die aufgrund der in der Praxis stattfindenden Auslenkung der Kurbelwelle in Querrichtung sich dann im Ergebnis sehr gut an eine vollständig zylindrische Mantelfläche annähert. Da dies theoretisch bei der Festlegung des Bearbeitungsprogrammes nur grob berücksichtigt werden kann, beinhaltet die Maschinensteuerung die Möglichkeit, nach dem fertigen der ersten Probestücke die noch vorhandenen Unrundheiten hinsichtlich Größe und Winkellage über ein Eingabefeld in die Steuerung einzugeben, die daraufhin selbsttätig und vorzugsweise für jeden Lagerzapfen einzeln und ggf. sogar über dessen axiale Länge unterschiedlich die Querbewegungen der Fräseinheiten bei der jeweiligen Winkellage des Werkstückes nachregelt.

Wenn zwei voneinander unabhängig arbeitende und ansteuerbare Fräseinheiten an ein und derselben dreh- und antreibbaren Kurbelwelle unterschiedliche exzentrische Bearbeitungsflächen bearbeiten, und ein optimaler Wert bzw. Bereich für die Spandicke eingehalten werden soll, kann unter Umständen nur an einer Bearbeitungsstelle die gewünschte maximale Schnittgeschwindigkeit, z. B. die Schnittgeschwindigkeit des HS-Fräsens, erzielt werden.

Um an den anderen Bearbeitungsstellen die Spandicke bzw., mittlere Spandicke im optimalen Bereich zu halten, muß unter Umständen dort die Drehzahl des Fräsers reduziert werden, und damit einhergehend auch die Schnittgeschwindigkeit. Aus diesem Grund wird beim Beginn der Zapfenbearbeitung der Fräser nicht direkt radial bis auf Sollmaß gefahren, sondern - während sich die Kurbelwelle dreht, langsam, während einer Drehung des zu bearbeitenden Zapfens von 30 - 90, vorzugsweise von 50 - 70°, langsam bis auf das radiale Sollmaß gefahren. Dadurch wird auch beim Beginn der Bearbeitung eines Lagerzapfens die Vorgabe hinsichtlich der Spandicke eingehalten, und es werden zu Beginn der Bearbeitung keine unzulässig hohen Querkräfte in das Werkstück eingebracht. Nach Erreichen des radialen Sollmaßes muß ein vollständiger Umlauf der Zapfenfläche, vorzugsweise ca. 100° Umfangsfläche, abgearbeitet werden, um zu einem optimalen Bearbeitungsergebnis zu gelangen.

Wenn es keinen optimalen Wert für die Spandicke im Hinblick auf die Lebensleistung eines Werkzeuges gibt, würde die Optimierung der unabhängigen Werkzeugeinheiten im Hinblick auf maximale Schnittgeschwindigkeit erfolgen. Diese vor allem für die Graugußbearbeitung (GGG60-GGG80) ermittelten Gesetzmäßigkeiten können für andere Werkstückmaterialien wie Stahl, bei denen auch andere Gruppen von Schneidstoffen eingesetzt werden, unter Umständen auch gültig sein.

Durch zusätzliche Verwendung einer positiven Schneidengeometrie anstelle der bisher beim Fräsen angewandten negativen Schneidengeometrie, die vor allem in Verbindung mit den niedrigen mittleren oder maximalen Spandicken dennoch zu einer ausreichenden Standzeit der Schneidmittel führt, ergibt sich wiederum eine Reduzierung der Schnittkräfte und in der Folge auch eine Reduzierung der notwendigen Antriebsleistungen für das Werkzeug, die bei den angegebenen Größenverhältnissen nur etwa die Hälfte bis ein Drittel der für das Innenfräsen oder Dreh-Drehräumen benötigten Leistung liegt. Auch dadurch werden - neben den niedrigeren Energiekosten - die Abwärmeprobleme der Antriebe, die sich immer negativ auf die gesamte Maschine und das Bearbeitungsergebnis auswirken, minimiert.

Das erfindungsgemäße Hochgeschwindigkeitsfräsen kann dabei insbesondere nicht nur am ungehärteten, sondern auch am gehärteten (z. B. 60 bis 62 Rockwell -Härtegrade HRC, insbesondere durchgehärtet) Werkstück durchgeführt werden In diesem Fall wird als Schneidstoff vorzugsweise Mischkeramik oder polykristallines Bornitrid (PKB), bei letzterem insbesondere wieder kubisches Bornitrid (CBN) eingesetzt. Vorzugsweise wird daher zunächst eine Hartmetall-Schneidplatte wie üblich gesintert, die jedoch Vertiefungen im Schneidenbereich, z. B. in der Spanfläche und zur Schneidkante hin offen, aufweist. In diese Vertiefungen des Grundkörpers wird CBN-Pulver gefüllt und anschließend gesintert.

Nicht nur die Ecken von Wendeschneidplatten können auf diese Art und Weise verstärkt werden, sondern durch Anordnung mehrerer CBN-Pallets nebeneinander entlang einer Schneidenkante oder eines balkenförmigen CBN-Einsatzes kann eine ganze Schneidkante verstärkt werden. Auch ungehärteter Stahl oder Guß kann damit bearbeitet werden, auch mittels Fräsen.

Diese Schneidstoffe können auch ohne Kühlschmiermittel, also trocken, eingesetzt werden, was Entsorgungskosten und Umweltprobleme erspart.

Dadurch ist es möglich, den bei konventioneller Herstellung (spanende Bearbeitung vor dem Härten) auftretenden Verzug des Werkstückes, bedingt durch den Härteprozeß, bereits durch die spanende Bearbeitung mit abzuarbeiten. Da beim Hochgeschwindigkeitsfräsen und insbesondere beim Hochgeschwindigkeitsfräsen am gehärteten Werkstück Oberflächenqualitäten erzielbar sind, die als Endzustand des Werkstückes akzeptabel sind, ist dadurch der völlige Wegfall zumindest des Grobschleifbearbeitungsvorganges möglich.

Als besonders günstig hat es sich erwiesen, bei der Bearbeitung der Zapfen- und Wangenflächen bei Kurbelwellen, die aus Guß oder Stahl bestehen, und im ungehärteten Zustand spanend bearbeitend werden mittels eines Außenrundfräsers, insbesondere mittels eines scheibenförmigen Fräsers mit Schneiden am Umfangsbereich, folgende Parameter einzuhalten:
- Schnittgeschwindigkeit bei der Schruppbearbeitung: mindestens 180, besser 250-600 m/min,
- Schnittgeschwindigkeit bei der Schlichtbearbeitung: mindestens 200, besser 300-800 m/min
- Spandicke: 0,05 - 0,5 mm insbesondere 0,1-0,3 mm.

Als Werkzeug wird dabei in der Regel ein scheibenförmiger, drehend angetriebener Werkzeuggrundkörper mit aufgesetzten Wendeschneidplatten verwendet. Dabei sind die Schneidplatten hinsichtlich ihres Einsatzzweckes (Bearbeitung der Stirnflächen an den Wangen, Bearbeitung der Mantelflächen an den Zapfen der Hauptlagerstelle und Hublagerstellen, Erstellen der Unterstiche am Übergang zwischen Mantelflächen und Stirnflächen) unterschiedlich gestaltet und auch in bezug zum Werkzeugträger bzw. zum Werkstück unterschiedlich positioniert:

| | Wangenplatte | | Unterstichplatte | | Zapfenplatte (Planplatte) | |
|---|---|---|---|---|---|---|
| Grundmaterial | K20-K25 | | K15 | | K10-K15 | |
| Beschichtung | TiCN+Al₂O₃+TiN oder TiN+TiCN+Al₂O₃+T iN oder TiN+Al₂O₃+TiN | | TiN | | TiCN+Al₂O₃+TiN oder TiN+TiCN+Al₂O₃+T iN oder TiN+Al₂O₃+TiN | |
| | von/bis | insbes. | von/bis | insbes. | von/bis | insbes. |
| Gesamtdicke der Beschichtung | 3-15 µm | 10-12 µm | 2-8 µm | 3-5 µm | 2-8 µm | 3-5 µm |
| γₚ | +1°... +8° | +5° | +4° | +4° | +2° | +2° |
| γ_{f} | -4°...+4° | -1° | +1° | +1° | +2° | +2° |
| γₙ | +5°... +14° | +9° | +9° | +9° | +9° | +9° |
| λₛ | +2°... +7° | +5° | +5° | +5° | +3° | +3° |
| κ | um +2° | 5° | | 4° | | - |
| Schneidkantenverrundung (SKV) | 0,01-0,05 mm | ca. 0,02 mm | ca. 0,02 mm | ca. 0,02 mm | ca. 0,02 mm | ca. 0,02 mm |
| Eckenradius R | 1,2-2,0 mm | 1,6 mm | 1,6 mm | 1,6 mm | - | - |
| Länge | min. 10 mm | 15,9 mm | 15,9 mm | 15,9 mm | 12,7 mm | 12,7 mm |
| Höhe | min. 10 mm | 12,7 mm | 12,7 mm | 12,7 mm | 12,7 mm | 12,7 mm |
| Dicke | min. 3 mm | 6,35 mm | 5,55 mm | 5,55 mm | 4,7 mm | 4,7 mm |
| **Angaben in bezug auf den Werkzeuggrundkörper:** | | | | | | |
| Schnittbreite | 23 mm | | - | | 13 mm (geteilt) bis 22 mm (komplett) | |
| Nenndurchmesser | z.B. 800 mm | | z.B. 800 mm | | z.B. 800 mm | |
| Teilungswinkel von Schneide zu Schneide | 3,6° | | 5,5°-7,5° | | 5,5°-7,5° | |
| Teilungsabstand von Schneide zu Schneide | 25 mm | | 35-50 mm | | 35-50 mm | |
| Anzahl Schneidplatten | z.B. 200 | | z.B. 120 (geteilt) bis 200 (komplett) | | z.B. 120 (geteilt) bis 200 (komplett) | |

Die Angabe des Grundmaterials bezieht sich auf die bekannten ISO-Anwendungsgruppen. Dabei besteht
K10: aus 94,2 % Wolframkarbid (WC), 5,5 % Kobalt (Co) und 0,3 % ... (Ta/C)
K20: aus 93,2 % WC, 6 % Co und 0,6% Ta/C und 0,2 % Titankarbid (TiC)
Die Biegefestigkeit beträgt 1.900 N/m² bei K10 und 2.000 N/m² bei K20.

Bei den angegebenen Beschichtungen sind die einzelnen Verbindungen schichtweise nacheinander in der angegebenen Reihenfolge von innen nach außen aufgetragen.

### e) Ausführungsbeispiele

Eine Ausführungsform gemäß der Erfindung ist im folgenden anhand der Figuren beispielhaft näher beschrieben. Es zeigen:
- Fig. 1a:: eine Frontansicht der Fräsmaschine,
- Fig. 1b:: eine Seitenansicht der Fräsmaschine gemäß Fig. 1a,
- Fig. 2:: eine Seitenansicht einer anderen Fräsmaschine,
- Fig. 3:: eine Seitenansicht einer hiervon unterschiedlichen Lösung,
- Fig. 4:: eine Frontansicht mit Tandemwerkzeug,
- Fig. 5:: eine Seitenansicht mit einem Fingerfräser, und
- Fig. 6:: Detaildarstellungen von Scheibenfräsern und den Bearbeitungsstellen an einer Kurbelwelle.
- Fig. 7:: eine Prinzipdarstellung des Gleichlauf-Außenfräsens an einem Kurbelwellenzapfen,
- Fig. 8:: eine Prinzipdarstellung bei gleichzeitiger Bearbeitung an zwei verschiedenen Hublagerzapfen,
- Fig. 9:: Detaildarstellungen von zwei unterschiedlichen Bearbeitungsstellen,
- Fig. 10:: eine Bahnkurve bei Zapfenbearbeitung,
- Fig. 11:: eine Darstellung der Bahnkurve beim Zapfenfräsen,
- Fig. 12:: den Schneidkeil des Werkzeuges in Prinzipdarstellung,
- Fig. 13 und 14:: definierte Ebenen im Werkzeugbezugssystem,
- Fig. 15 und 16:: die Lagewinkel der Schneide im Werkzeugbezugssystem am Beispiel eines Drehmeißels für das Längsdrehen (Fig. 15) und das Plandrehen (Fig. 16).

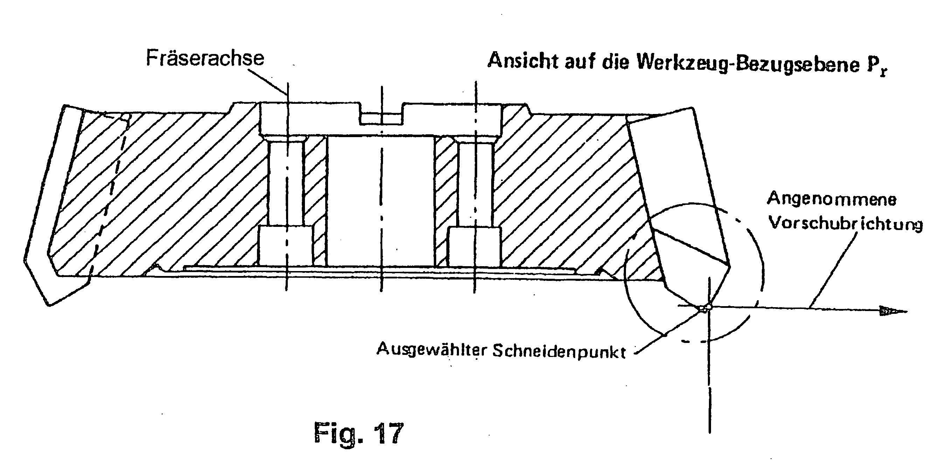

- Fig. 17:: einen Schnitt durch einen Fräsmesserkopf,
- Figuren 18a-18f:: Schnitte durch das Werkzeug des Fräsmesserkopfes gemäß Fig. 17.
- Fig. 19a:: zeigt den Einsatz einer Wangenplatte, betrachtet in Y-Richtung,
- Fig. 19b:: den Einsatz einer Zapfenplatte in Blickrichtung Y,

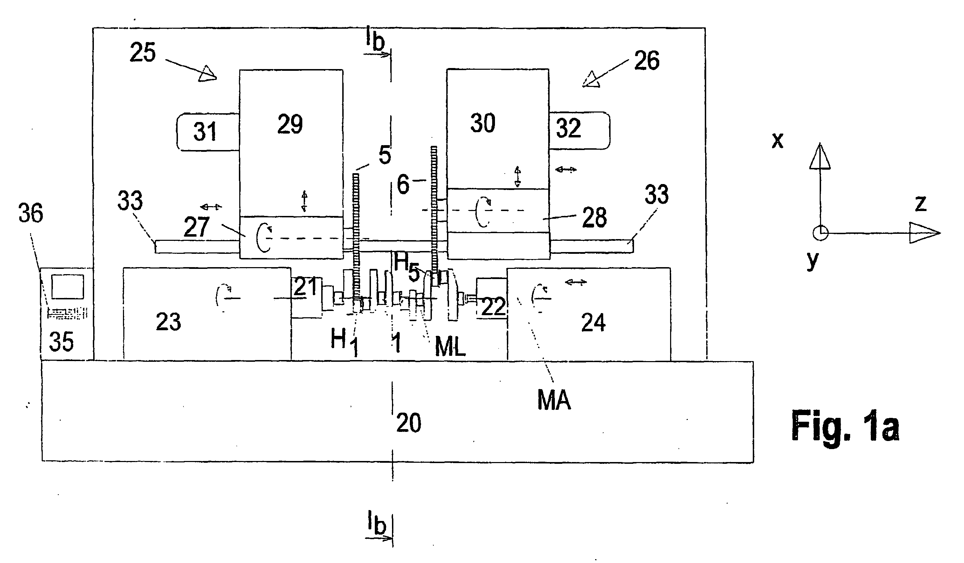

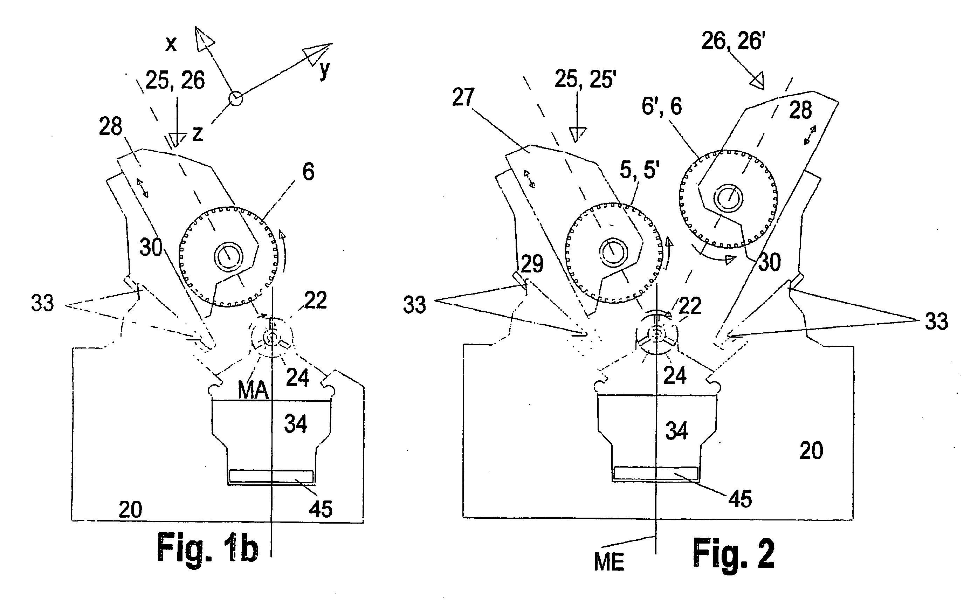

Die in den Figuren 1a und 1b dargestellte Fräsmaschine umfaßt ein Bett 20 mit einer Spänewanne 34 und einem darin untergebrachten Späneförderer 45. Über der Spänewanne 34 sind in Z-Richtung beabstandet und gegeneinandergerichtet zwei Spindelstöcke 23, 24 aufgesetzt, von denen wenigstens der eine Spindelstock 24 in Z-Richtung verfahrbar ist.

Die Spindelstöcke tragen wiederum gegeneinander gerichtete Futter 21, 22, welche drehend antreibbar sind und in ihrer Drehung miteinander elektronisch synchronisiert sind.

Zwischen den beiden Futtern 21, 22 ist eine Kurbelwelle 1 eingespannt, welche vom Futter 21 an ihrem Endflansch und vom Futter 22 an ihrem Endzapfen, also auf der Mittelachse MA der Kurbelwelle 1, welche damit mit der Spindelstockachse zusammenfällt, gespannt ist. Die Bandflächen, also die Umfangsflächen am Endlagerflansch und am Endlagerzapfen, sind dabei vorbearbeitet, insbesondere spanend vorbearbeitet, und zusätzlich sind zum Einlegen der Kurbelwelle in die Spannfutter in einer definierten Drehlage entsprechende Anschlagflächen vorbearbeitet an der Kurbelwelle vorhanden.

Da die Spindelstöcke 23, 24 die Kurbelwelle nicht nur drehend antreiben, sondern auch in ihrer Drehlage positionieren können (ausgebildete C-Achse) ist die darin gespannte Kurbelwelle 1 jederzeit während der Bearbeitung in die gewünschte Drehlage bringbar, und dies mit einer definierten Geschwindigkeit.

In Blickrichtung der Fig. 1a hinter der Spänewanne 34 und von dieser aus schräg nach hinten ansteigend sind auf dem Bett 20 der Fräsmaschine Z-Führungen 33 angeordnet, auf welchen die in Fig. 1a sichtbaren Unterschlitten 29, 30 der Werkzeugsupporte 25, 26 in Z-Richtung verfahrbar sind.

Auf jedem der Unterschlitten 29, 30 läuft ein Oberschlitten 27, 28, welcher jeweils einen Scheibenfräser 5, 6 um eine zur Z-Achse parallele Achse drehend antreibbar trägt.

Der Oberschlitten 27, 28 ist dabei relativ steil von oben her, unter einem Winkel von weniger als 45° zur Senkrechten, in X-Richtung auf die Mittelachse MA bewegbar. Die X-Führungen zwischen Oberschlitten 27, 28 und den Unterschlitten 29, 30 stimmt dabei vorzugsweise mit der Verbindung der Mittelpunkte der Scheibenfräser 5 bzw. 6 und der Mittelachse MA überein.

Um mit einer derartigen Fräsmaschine mit einem außen verzahnten Scheibenfräser den Umfang eines Hublagerzapfens H1, H2 über den gesamten Umfang bearbeiten zu können, muß die auf der Mittelachse MA gespannte Kurbelwelle 1 während der Bearbeitung mindestens eine vollständige Umdrehung vollziehen.

Wie am besten anhand von Fig. 1a nachvollziehbar ist, werden während der Drehung der Kurbelwelle 1 mit Hilfe der Werkzeugsupporte 25, 26 die gleichzeitig im Einsatz an unterschiedlichen Bearbeitungsstellen befindlichen Scheibenfräser 5, 6 in X-Richtung ständig nachgeführt.

Wie später im Detail erläutert werden wird, sind somit die Bewegungen der beiden Werkzeugsupporte 25, 26 indirekt voneinander abhängig, indem sie von der Drehung der gemeinsam bearbeiteten Kurbelwelle und der Geometrie der zu bearbeitenden exzentrischen Flächen abhängen.

Wenn dabei Optimierungen der Bearbeitung durch diese mehreren unabhängig voneinander steuerbaren Supporte vorgenommen werden sollen, beispielsweise im Hinblick auf eine bestimmte Spandicke, bewegen sich die Scheibenfräser 5, 6 nicht nur in X-Richtung unterschiedlich, sondern drehen sich großenteils auch mit unterschiedlichen, ständig angepaßten Drehzahlen.

Die Fräser 5, 6 als auch deren Supporte 25, 26 und die Drehung der Spindelstöcke, also der Kurbelwelle 1, gemeinsam steuernde Maschinensteuerung kann zusätzlich über ein Eingabefeld 36 an der Maschine aufgrund des in der Praxis ermittelten Bearbeitungsergebnisses der ersten Stücke einer Werkstückserie mit Korrekturwerten nachkorrigiert werden.

In Fig. 1b liegen die Werkzeugsupporte 25, 26 und damit auch die Bewegungsrichtungen der Fräser 5, 6 sowie der Oberschlitten 27, 28 in Blickrichtung fluchtend hintereinander.

Demgegenüber ist in Fig. 2 - deren Gegenstand nicht unter das vorliegende Patent fällt - eine andere Maschinenausgestaltung dargestellt, wo im Unterschied zu Fig. 1b die analog aufgebauten Supporte 25, 26 bezüglich einer Mittelebene ME, nämlich der Vertikalebene durch die Spindelstockachse, gespiegelt angeordnet sind. Die Bewegungsrichtungen der Fräser 5, 6 in X-Richtung auf das Werkstück zu sind somit V-förmig zueinander gelagert.

Aufgrund der relativ großen Durchmesser der Scheibenfräser 5, 6 ist dabei eine gleichzeitige Arbeit der Scheibenfräser 5, 6 an unterschiedlichen Axialpositionen der Kurbelwelle möglich, und zusätzlich können in Blickrichtung der Fig. 2 hinter den Werkzeugsupporten 25, 26 axial beabstandet nochmals dieselben Werkzeugsupporte 25', 26' angeordnet sein. Durch dann gleichzeitig mögliche Bearbeitung an der Kurbelwelle mittels vier Scheibenfräsern 5, 5', 6, 6' sind optimal kurze Bearbeitungszeiten für Kurbelwellen und ähnliche Teile möglich.

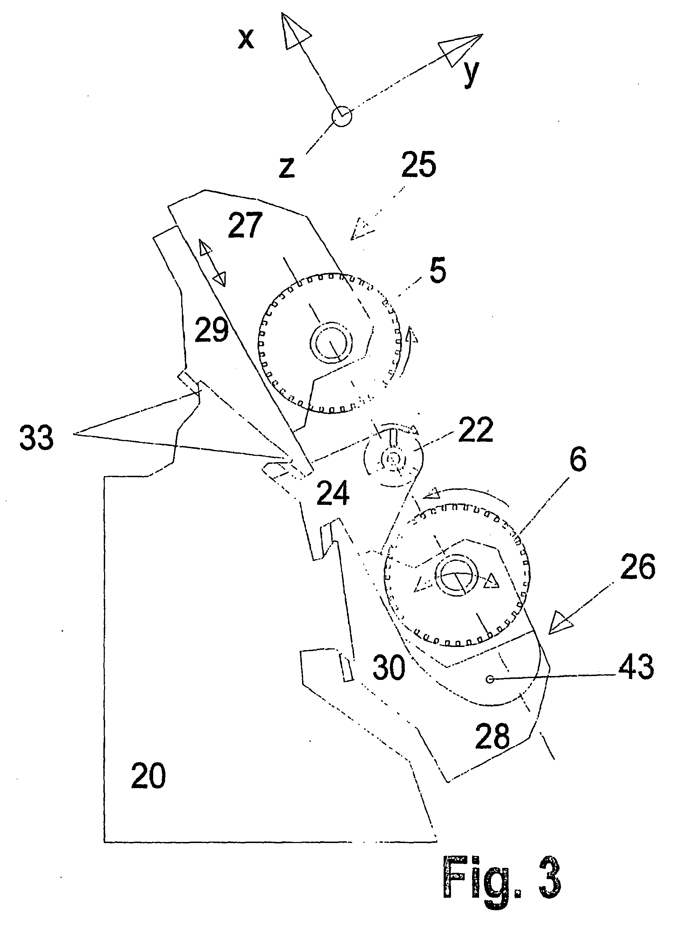

Fig. 3 - deren Gegenstand nicht unter das vorliegende Patent fällt - zeigt - betrachtet in der gleichen Blickrichtung der Fig. 1, nämlich in Z-Richtung, einen anderen Maschinenaufbau, bei welchem die Supporte 25, 26 von gegenüberliegenden Seiten her an dem Werkstück angreifen. Die Bewegungsrichtungen der beiden Scheibenfräser 5, 6 liegen dabei auf einer Linie, welche durch die Spindelstockachse hindurch verläuft, und sind dabei ebenso stark gegenüber der Senkrechten geneigt wie bei der Lösung gemäß Fig. 1b. An dem Schrägbett befindet sich der eine Support 25 oberhalb und der andere Support 26 unterhalb der Spindelstöcke 23, 24.

Auch bei dieser Maschinenausgestaltung können in Blickrichtung der Fig. 3 hinter den Supporten 25, 26 nochmals gleiche Supporte axial beabstandet angeordnet werden, so daß auch hier mehr als zwei, beispielsweise vier oder gar sechs unabhängig voneinander steuerbare Fräser am Werkstück angreifen können.

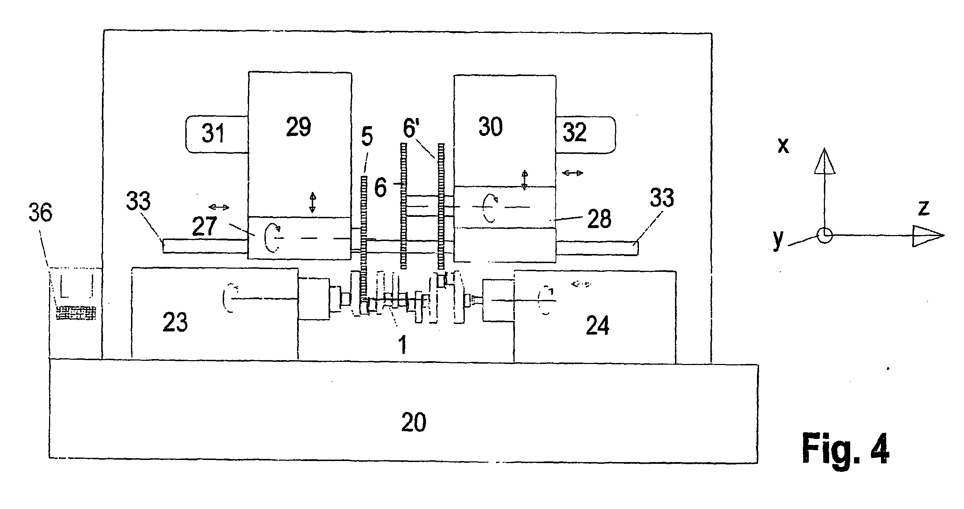

Fig. 4 zeigt eine Darstellung ähnlich Fig. 1a, wobei jedoch drei Scheibenfräser zu erkennen sind. Von den drei Scheibenfräsern sind jedoch zwei zu einem Mehrfachwerkzeug 42 gekoppelt, indem die beiden Scheibenfräser, welche dem Werkzeugsupport 26 zugeordnet sind, axial beabstandet, jedoch drehfest miteinander verbunden sind und gemeinsam von diesem Support 26 angetrieben werden. Damit lassen sich in Z-Richtung fluchtende Bearbeitungsstellen, beispielsweise der zweite und dritte Hubzapfen einer Kurbelwelle für einen Vierzylinder-Reihenmotor, gleichzeitig bearbeiten.

Die Maschine der Fig. 4 zeigt somit zwar drei Scheibenfräser, jedoch nur zwei unabhängig voneinander steuerbare Fräseinheiten.

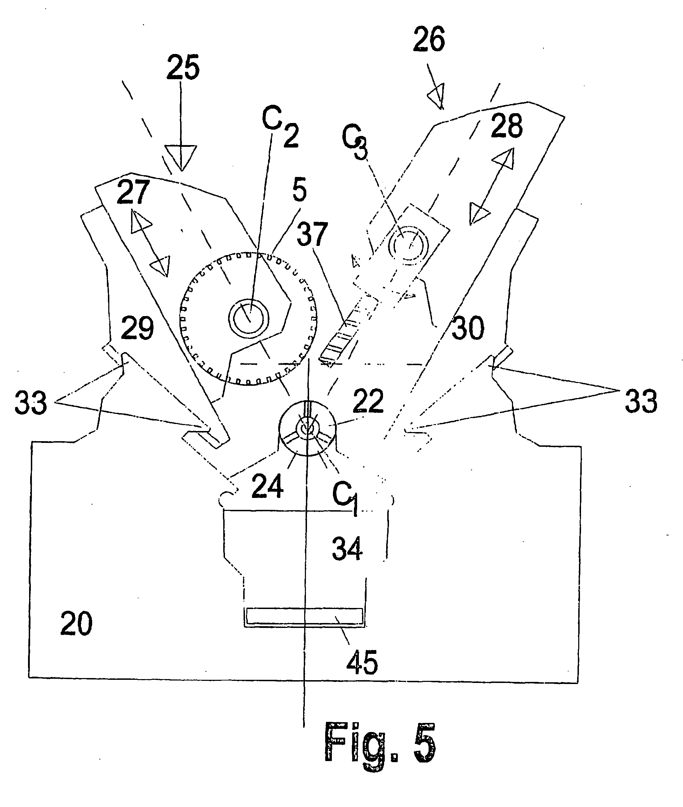

Fig. 5 -deren Gegenstand nicht unter das vorliegende Patent fällt - zeigt eine Seitenansicht einer Fräsmaschine ähnlich Fig. 2. Dabei ist der Support 25 noch identisch aufgebaut wie in Fig. 2, also mit einem Scheibenfräser 5 ausgestattet, welcher um eine zur Z-Richtung, also der Spindelstockachse, parallele Achse drehend antreibbar ist.

Dabei bewegt sich der Mittelpunkt des Scheibenfräsers 5 in X-Richtung, also parallel zu den X-Führungen zwischen Unterschlitten 29 und Oberschlitten 27 auf einer Ebene, die oberhalb der Spindelachse verläuft. Dadurch ergibt sich eine kompaktere Bauform der Fräsmaschine durch in der Höhe verkürzten Werkzeugsupport.

Im Gegensatz dazu trägt der Werkzeugsupport 26, welcher analog zum Support 25 einen Unterschlitten 30 und einen Oberschlitten 28 umfaßt, einen Fingerfräser 37, dessen Achse quer zur Spindelstockachse verläuft. Dieser Fingerfräser 37 ist um eine zur Z-Richtung, also der Spindelstockachse, parallele Achse im Obersupport 28 schwenkbar gelagert. Dadurch ist die Bearbeitung von exzentrischen Mantelflächen, beispielsweise die Bearbeitung eines Hublagerzapfens der zentrisch eingespannten Kurbelwelle, möglich, indem während der langsamen Rotation der Kurbelwelle der Fingerfräser 37 durch Verschwenken gegenüber dem Oberschlitten 28 und verfahrenen X-Richtung der Oberschlittens 28 gegenüber dem Unterschlitten 30 ständig nachgeführt wird.

Anstelle der Verfahrbewegung des Fingerfräsers 37 mit dem Oberschlitten 28 in X-Richtung ist auch ein zusätzliches Verschwenken, also quasi ein Verschwenken des Oberschlittens 28 gegenüber dem Unterschlitten 30, zur Kompensation in X-Richtung, möglich.

Die in Fig. 5 dargestellte Maschine kann anstelle der Bestückung mit Scheibenfräsern und Fingerfräsern auch ausschließlich mit Fingerfräsern ausgestattet sein, was im übrigen für alle anderen Maschinenformen gemäß der vorliegenden Erfindung gilt.

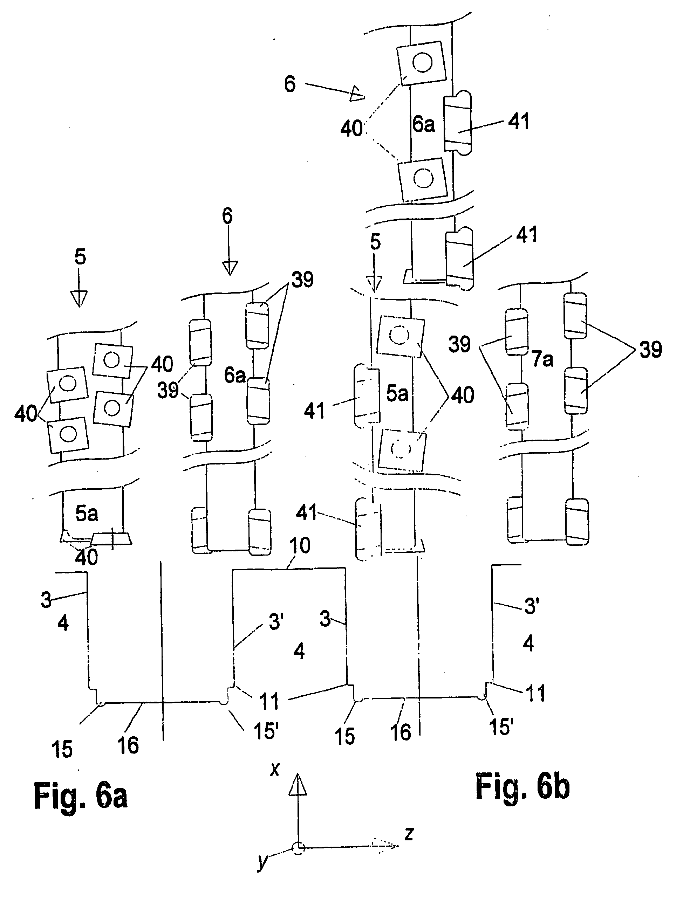

Die Fig. 6 zeigt die an einer Kurbelwelle typischerweise zu bearbeitenden Flächen und die hierfür vorgesehene Bestückung der Grundkörper 5a, 6a, 7a der Schneidfräser 5, 6 mit auswechselbaren Schneidplatten:

In Fig. 6a sind die Wangenplatten 39 zur Bearbeitung von Wangenseitenflächen 3 beiderseits auf den Stirnflächen des scheibenförmigen Grundkörpers 6a eines Scheibenfräsers 6 angeordnet, wobei die Wangenplatten 39 natürlich auch radial über den Grundkörper 6a vorstehen. Durch die beidseitige Anordnung der Wangenplatten auf dem Grundkörper 6a können sowohl linke als auch rechte Wangenflächen 3 und 3' bearbeitet werden.

Die Anordnung der Wangenplatten 39 auf einem eigenen Grundkörper 6a ist zu empfehlen, da diese aufgrund des hohen Zerspanungsvolumens an den Wangenseitenflächen 3, 3' schneller verschleißen und gewechselt werden müssen als z. B. die Zapfenplatten 40. Diese sind in Fig. 6a auf der Umfangsfläche eines scheibenförmigen Grundkörpers 5a eines Scheibenfräsers 5 in zwei axial beabstandeten Bahnen angeordnet, die sich in Z-Richtung überlappen und in Z-Richtung auch auf der jeweiligen Außenseite über den Grundkörper 5a vorstehen.

Mit einem solchen Scheibenfräser 5, der ausschließlich mit Zapfenplatten 40 bestückt ist, werden ausschließlich Mantelflächen, beispielsweise die Zapfenfläche 16, bearbeitet. Mit einem solchen Scheibenfräser 5 gemäß Fig. 6a kann - durch zusätzliche gesteuerte Verlagerung des Scheibenfräsers 5 in Z-Richtung - auch eine Zapfenfläche 16 bearbeitet werden, die in Z-Richtung deutlich breiter ist als die Breite des Scheibenfräsers 5. Durch die spiralige Bearbeitungsbahn werden ringförmige Absätze zwischen axial beabstandeten Bearbeitungsbereichen einer Zapfenfläche 16 vermieden.

Eine andere Lösung zeigt Fig. 6b. Auch dort sind die Wangenplatten 39 auf einem eigenen Grundkörper 7a eines Fräsers angeordnet. Für die Bearbeitung der Zapfenfläche 16 und der diese beiderseits abschließenden Unterstiche 15 sind jedoch zwei getrennte Scheibenfräser 5, 6 für die linke bzw. rechte Hälfte der Zapfenfläche vorgesehen:

Dabei befinden sich auf dem Grundkörper 5a bzw. 6a jeweils auf dem Umfang aufgebrachte Zapfenplatten 40, während auf die Stirnfläche des Grundkörpers, also für die rechte Hälfte in +Z und die linke Hälfte in -Z-Richtung hin, Unterstichplatten 41 zum Herstellen des Unterstiches 15 bzw. 15' angeordnet sind. Die Unterstichplatten 41 stehen dabei selbstverständlich radial wieder über den Grundkörper 5a bzw. 6a vor. Die Bearbeitungsbreite der beiden Fräser 5, 6 in Z-Richtung ist dabei so groß, daß sich in der Zapfenmitte die Bearbeitungsbereiche überlappen. Um hier keinen ringförmigen Absatz zu erhalten, sind in diesem Fall die Zapfenplatten 40 zur Mitte des Lagerzapfens hin leicht abfallend, also abgeschrägt oder gar gerundet, ausgebildet, um in der Mitte der Lagerstelle anstatt eines scharfen Absatzes nur eine ballige Erhöhung zu erzeugen.

Die in Fig. 6a nicht dargestellten Unterstichplatten 41 sind dort auf einem separaten Fräser angeordnet, um die Unterstiche 15, 15' separat zu erzeugen.

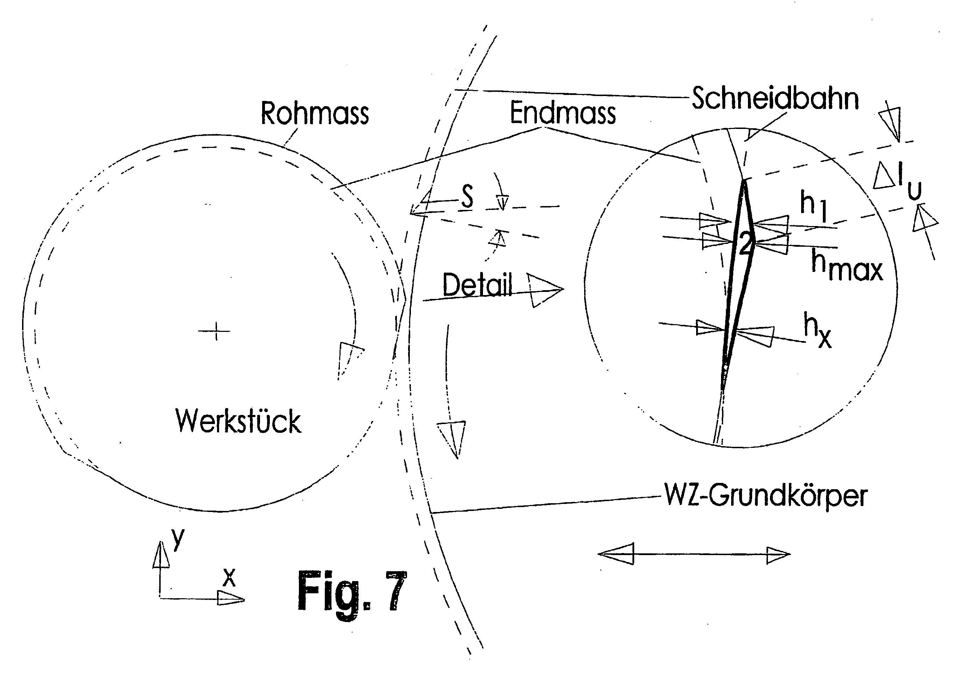

Fig. 7 zeigt in Blickrichtung der Z-Achse die grundsätzliche Situation der Bearbeitung einer Umfangsfläche, beispielsweise des Zapfens einer Kurbelwelle, aber auch einer unrunden Umfangsfläche, mittels Außenfräsen. Eine Vergrößerung der Bearbeitungsstelle ist im rechten Teil der Fig. 7 dargestellt.

Das Werkstück soll von dem größeren Rohmaß auf das kleinere Endmaß bearbeitet werden.

Dabei stehen die Schneiden S, von denen nur eine eingezeichnet ist, über den Werkzeuggrundkörper radial vor, um diesen Abtrag bewirken zu können. Der Werkzeuggrundkörper ist dabei in X-Richtung definiert verfahrbar und rotiert gegen den Uhrzeigersinn. Da das Fräsen im Gleichlauf geschehen soll, rotiert das Werkstück im Uhrzeigersinn, so daß sich an der Bearbeitungsstelle Werkzeug und Werkstück in die gleiche Richtung bewegen.

Wie die vergrößerte Darstellung zeigt, wird die neue Schneide S einen Span 1 erzeugen, der durch zwei konvexe und eine konkave Bogensegmente im Querschnitt begrenzt wird, und die Form eines flachen, unregelmäßigen Dreiecks, besitzt.

Dabei ist die konkave Seite die durch den vorhergehenden Schnitt erzeugte Flanke, und die lange konvexe Seite, die durch den die neue Schneide S erzeugte Flanke. Die kurze konvexe Flanke ist die entlang des Umfanges des Zweigstückes gemessene Länge △Iᵤ, also die Umfangslänge zwischen dem Auftreffen von zwei hintereinander angeordneten Schneiden des Werkzeuges auf dem Umfang des Werkstückes.

In der Praxis behält der Span 1 natürlich nicht die aus Fig. 7 ersichtliche Form bei, sondern wird aufgrund der Ablenkung an der Spanfläche der Schneide spiralig aufgerollt.

Aus Fig. 7 ist zu erkennen, daß der Span 2 - in Durchlaufrichtung der Schneide betrachtet - zunächst in seiner Spandicke, z. B. h₁, schnell zunimmt bis zur maximalen Spandicke hₘₐₓ. Von dort aus nimmt die Spandicke relativ langsam bis zum Ende kontinuierlich (z. B. hₓ) ab.

Aus dieser Darstellung ist ersichtlich - wenn die Differenz zwischen Rohmaß und Endmaß gleich bleibt und die Drehgeschwindigkeit des Werkstückes ebenfalls gleich bleibt - daß eine Verringerung der Drehgeschwindigkeit des Werkzeuges eine Vergrößerung des Schnittabstandes △Iᵤ bewirkt, und damit auch eine Vergrößerung von hₘₐₓ.

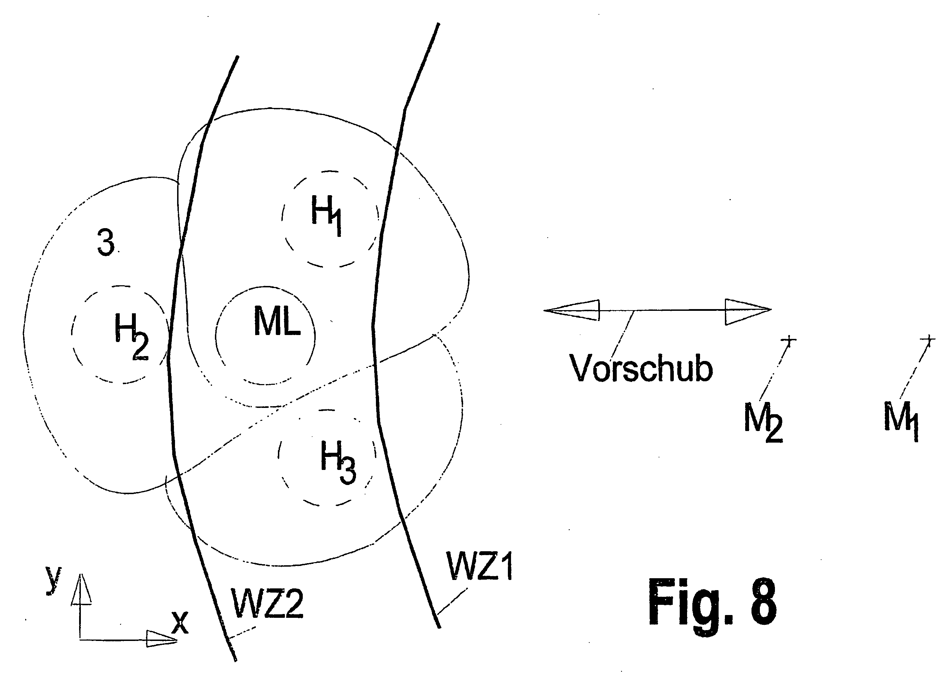

Fig. 8 stellt - wiederum in Z-Richtung betrachtet - z. B. eine Kurbelwelle für einen 6-Zylinder-Reihenmotor mit drei in ihrer Drehlage zum Mittellager ML unterschiedlich positionierten Hubzapfen H1-H3 dar.

An dieser Kurbelwelle sind - an unterschiedlichen axialen Positionen - zwei separate Werkzeuge, beispielsweise scheibenförmige Außenfräser (WZ1, WZ2) im Einsatz. Eins der Werkzeuge könnte beispielsweise den Hubzapfen H1, das andere den Hubzapfen H2 bearbeiten, wie in Fig. 8 dargestellt, aber ebenso könnte eines der Werkzeuge einen Hubzapfen, das andere der Werkzeuge die Stirnfläche einer Wange bearbeiten.

Bei Stillstand der Kurbelwelle ist jedoch an der an anderer axialer Position stattfindenden Bearbeitung einer Mantelfläche, sei es eines Hubzapfens H oder eines Mittellagers ML, kein Bearbeitungsfortschritt erzielbar, wird auch die Bearbeitung der Wangenfläche bei drehender Kurbelwelle erfolgen.

Dabei ergeben sich - bei einem Beginn der Wangenbearbeitung in der in Fig. 8 dargestellten Position der Kurbelwelle und anschließendem Weiterdrehen der Kurbelwelle - Schneidbahnen sₐ, s_{b}, sₘ, sₓ, von denen einige in Fig. 8 eingezeichnet sind.

Wie ersichtlich, haben diese Schneidbahnen - wegen des Gleichlaufes des Fräsers - mit der Werkstückdrehung - an ihrem Beginn einen größeren Abstand voneinander als an ihrem Ende, also dem Punkt des Auslaufens der Schneide aus der Wangenseitenfläche.

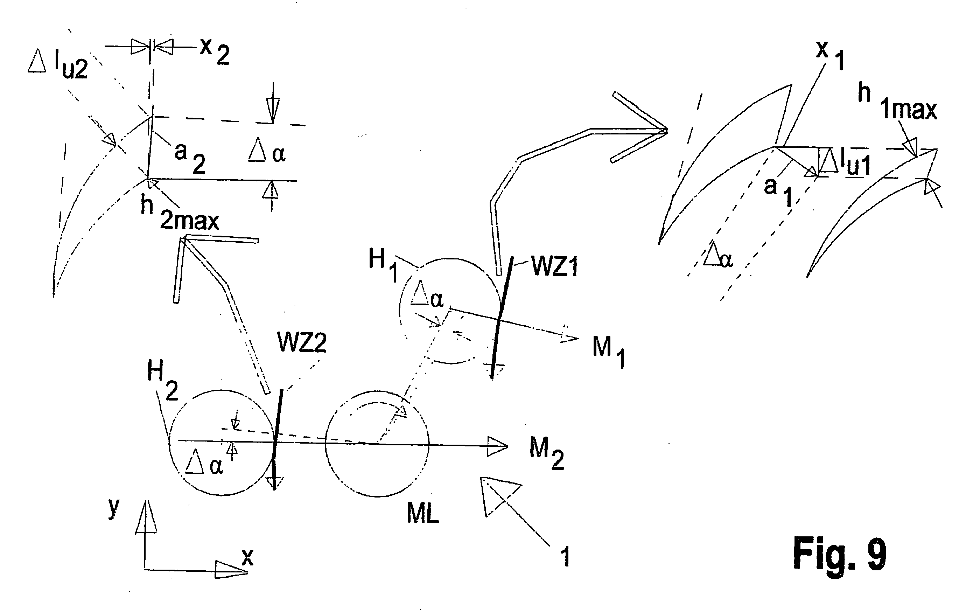

Fig. 9 zeigt die Zusammenhänge auf, wenn zwei separate Werkzeuge WZ1, WZ2 zwei verschiedene Hubzapfen H1, H2 gleichzeitig bearbeiten. Die Werkzeuge WZ1 und WZ2 können unabhängig voneinander in X-Richtung definiert verfahren und in ihrer Drehzahl gesteuert werden. Die verbindende Größe ist jedoch die Drehung der um die Mittellager ebenfalls gesteuert drehbar angetriebenen Kurbelwelle als Werkstück, welche bei bestimmten Arbeitsoperationen auch angehalten werden kann.

In der in Fig. 9 dargestellten Situation befindet sich Hubzapfen H2 auf einer Linie mit dem Mittellager ML1 und dem Mittelpunkt M₁ und M₂ der Werkzeuge WZ1 oder WZ2. Der Hubzapfen H1 ist gegenüber dem Mittellager um ca. 120° in Uhrzeigerrichtung versetzt.

Wenn - wie angegeben - die Werkzeuge WZ1 und WZ2 jeweils im GegenUhrzeigersinn rotieren, und die Kurbelwelle - wie an deren Mittellager ML eingezeichnet - im Uhrzeigersinn, wird ersichtlich an dem Hublager H1 im Gleichlaufverfahren gefräst, was aus den oben angegebenen Gründen gewünscht wird.

Am Hublager H2 könnte der Eindruck entstehen, daß es sich hier um ein Gegenlauffräsen handelt, da sich das Werkzeug WZ2 an dieser Stelle nach unten bewegt, der Hubzapfen H2 jedoch nach oben.

Auf die Absolutbewegung des Hubzapfens kommt es jedoch bei der Beurteilung, ob Gleichlauf- oder Gegenlauffräsen vorliegt, nicht an, sondern darauf, ob das Hublager H2 relativ um seinen Mittelpunkt eine Drehung vollzieht, die seine Oberfläche an der Bearbeitungsstelle immer in der gleichen Richtung bewegen läßt wie den Fräser.

Der in Fig. 9 - absolut betrachtet - nach oben wandernde Hubzapfen H2 rollt jedoch ersichtlich entlang des Werkzeuges WZ2 nach oben ab, so daß also relativ zum Mittelpunkt des Hublagers H2 eine Drehung des Hublagers im Uhrzeigersinn stattfindet und damit an der Bearbeitungsstelle de facto Gleichlauf herrscht.

Fig. 9 zeigt ferner den zwangsweise vorhandenen Zusammenhang zwischen der Bearbeitung an den beiden Hublagern H1 und H2, die vor allem bei der Optimierung von mehreren gleichzeitig ablaufenden Bearbeitungsvorgängen im Hinblick z. B. auf eine bestimmte Spandicke zu berücksichtigen ist:

Es sei angenommen, daß sich der Fräser WZ2 in Relation zur Kurbelwelle 1 - von welcher in Fig. 9 nur das Mittellager ML und die zwei momentan bearbeiteten Hubzapfen H1 und H2 der Übersichtlichkeit halber dargestellt sind - so schnell relativ zueinander drehen, daß zwischen dem Eingriff zweier aufeinanderfolgender Schneiden des Werkzeuges WZ2 am Hublager H2 die Kurbelwelle um den Winkel Δα weitergedreht wurde. Da in Fig. 9 der Mittelpunkt des Hublagers H2 und der Mittelpunkt der Kurbelwelle, also des Mittellagers ML, auf einer Linie mit der Mitte M2 des Werkzeuges WZ2 liegen, bewirkt der Schwenkwinkel Δα einen Versatz a₂ des Auftreffpunktes der neuen Schneide gegenüber der alten Schneide, der fast genau in Y-Richtung verläuft.

Dadurch muß nur eine sehr geringe X-Komponente x₂ durch entsprechende X-Bewegung des Werkzeuges WZ2 erfolgen, und der sich ergebende Schnittabstand △Iᵤ₂ bedingt einen Spanquerschnitt, dessen Dicke der optimalen Spandicke entsprechen soll.

An der Bearbeitungsstelle des Hublagerzapfens H1 soll ebenfalls möglichst die gleiche Spandicke erzielt werden. Auch der Mittelpunkt des Hublagerzapfens H₁ ist - gleiche Drehzahl und gleichen Durchmesser der Werkzeuge WZ1 und WZ2 vorausgesetzt - um den Winkelbetrag Δα gegenüber der Mitte des Hublagers verschwenkt worden, bis vom Werkzeug WZ1 die nächste Schneide in Eingriff gelangt.

Der an der Bearbeitungsstelle dadurch bewirkte Versatz a₁ ist dabei vernachlässigbar größer als a₂, da der Abstand von der Mitte des Mittellagers ML zur Bearbeitungsstelle am Hublager H1 geringfügig größer ist als zur Mitte des Hublagers H₁. Dieser Versatz a₁ besitzt eine ausgeprägte Komponente x₁ in X-Richtung, die durch entsprechende Bewegung des Werkzeuges WZ1 in X-Richtung ausgeglichen werden muß. Damit bleibt von a₁ nur ein relativ geringer Anteil als Schnittabstand △Iᵤ₁ in Y-Richtung übrig. Dies würde den in Fig. 9 rechts außen dargestellten dünnen Span mit einer Maximaldicke von nur h₁ₘₐₓ ergeben, welche sehr viel geringer ist als die optimale Spandicke.

Um auch an dieser Bearbeitungsstelle auf die optimale Spandicke zu kommen, muß die Drehzahl des Werkzeuges WZ1 gegenüber der Drehzahl von WZ2 so reduziert werden, daß der Schnittabstand △Iᵤ₁ soweit ansteigt, bis die gewünschte Spandicke auch am Hublagerzapfen H₁ erreicht wird. Dabei ist eine Reduzierung der Drehzahl von Werkzeug WZ1 auf bis zu etwa 30 % der Drehzahl von Werkzeug WZ2 notwendig.

Neben dem beschriebenen ersten Optimierungsziel einer bestimmten - mittleren oder maximalen - Spandicke könnte das sekundäre Optimierungsziel eine Schnittgeschwindigkeit sein, die sich innerhalb eines vorgegebenen Zielkorridors bewegen soll oder einen bestimmten Maximalwert nicht überschreiten soll.

Im ersteren Fall würde dies in dem in Fig. 9 dargestellten Bearbeitungsfall dazu führen, daß bei der Bearbeitung des Hublagers H2 die Drehzahlen des Werkstückes und des Werkzeuges WZ2 in Relation zueinander - so daß am Hublager H2 die gewünschte Spandicke erhalten bleibt, so erhöht werden, daß sich die Drehzahl von Werkzeug WZ2 am oberen Ende der vorgegebenen Bandbreite für die Schnittgeschwindigkeit bewegt. Dadurch ergibt sich auch eine Erhöhung der Drehzahl des Werkzeuges WZ1, wodurch die Schnittgeschwindigkeit am Hublagerzapfen H₁ ebenfalls noch innerhalb der vorgegebenen Bandbreite für die Schnittgeschwindigkeit liegen sollte.

Bei Vorgabe einer Obergrenze für die Schnittgeschwindigkeit dagegen würde diese Obergrenze auf die Bearbeitung am Hublagerzapfen H₂ angewandt werden, welche die höhere Schnittgeschwindigkeit gegenüber der Bearbeitung am Hublagerzapfen H₁ besitzt, so daß dadurch eine absolute Obergrenze der Schnittgeschwindigkeit automatisch an beiden vorhandenen Bearbeitungsstellen eingehalten wird.

Bei der gleichzeitigen Bearbeitung von mehr als zwei Stellen an einer Kurbelwelle ist analog das begrenzende Kriterium bei absoluten Höchst- oder Mindestwerten immer auf die Bearbeitungsstelle mit dem relativ höchsten bzw. niedrigsten entsprechenden Wert anzuwenden.

Bei der Anwendung von vorgegebenen Bandbreiten bestimmter Schnittparameter kann es sein, daß nicht für alle Bearbeitungsstellen die Einhaltung dieser Bandbreite möglich ist. In diesem Fall ist dann entweder der vorgegebene Bandbreitenbereich zu vergrößern oder es muß ein drittrangiger Optimierungsparameter vorgegeben werden. Diese dritte Optimierungsgröße könnte beispielsweise die Spanlänge (vor allem bei Bearbeitung von Wangenseitenflächen) sein.

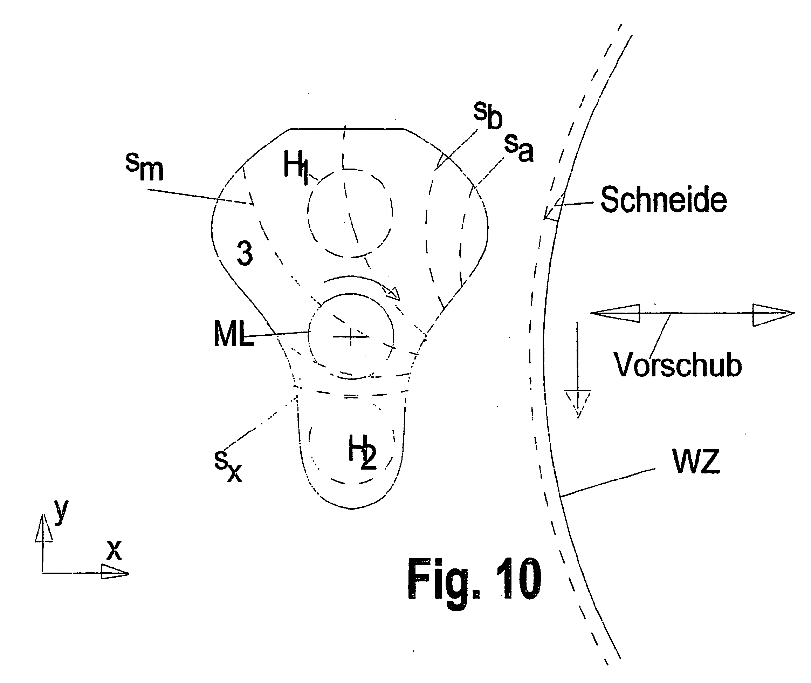

Die in Fig. 9 dargestellten gegenseitigen Abhängigkeiten bei Einhaltung einer bestimmten Spandicke treten verstärkt dann auf, wenn eine von mehreren gleichzeitigen Bearbeitungsstellen an der Kurbelwelle die Bearbeitung einer Stirnfläche einer Wange ist, wie in Fig. 10 dargestellt. Die Darstellung in Fig. 10 zeigt eine Kurbelwelle z. B. für einen Vierzylinder-Reihenmotor, bei der sich in radialer Richtung die Hubzapfen H1 und H2 bezüglich des Mittellagers ML gegenüberstehen.

Wenn in der in Fig. 10 dargestellten Position mit der Bearbeitung der Wangenfläche 3 durch das Werkzeug WZ begonnen würde, würde sich die Kurbelwelle um die Mitte des Mittellagers ML weiter in der angegeben Richtung (im Uhrzeigersinn) drehen, während das Werkzeug WZ gegen den Uhrzeigersinn dreht, um Gleichlauffräsen zu erzielen.

Auf der Wangenfläche 3 sind einige der sich dadurch ergebenden Schneidbahnen sₐ, s_{b}, sₘ, sₓ eingezeichnet.

Wegen der gleichzeitigen Drehung der Kurbelwelle ergeben sich dadurch Spanquerschnitte, die wiederum am Beginn des Spanes deutlich größer sind als gegen Ende des Spanes, und zusätzlich unterscheiden sich die Späne stark in der Spanlänge, abhängig von der jeweiligen Lage der Schneidbahn auf der Wangenfläche 3.

Auf eine Drehung der Kurbelwelle kann in der Regel nicht vollständig verzichtet werden, da sonst ein an anderer Stelle der Kurbelwelle gerade stattfindende Bearbeitung eines Lagerzapfens keinen Bearbeitungsfortschritt mehr zeitigen würde.

Wenn somit an einer Kurbelwelle gleichzeitig mehrere Wangenseitenflächen oder eine Wangenseitenfläche gleichzeitig mit der Bearbeitung eines Lagerzapfens stattfindet, treten die am Beispiel der Fig. 9 dargestellten Diskrepanzen der Spandicken zwischen den verschiedenen Bearbeitungsstellen bei gleichen Drehzahlen und Durchmessern aller Werkzeuge verstärkt auf, so daß verstärkt die Drehzahlen, und/oder bei Wangenbearbeitung auch die Bewegung in Querrichtung, also X-Richtung durch den Fräser, ständig verändert werden müssen, um in jeder Phase der Bearbeitung und an allen Bearbeitungsstellen gleichzeitig die gewünschte optimale Spandicke einzuhalten.

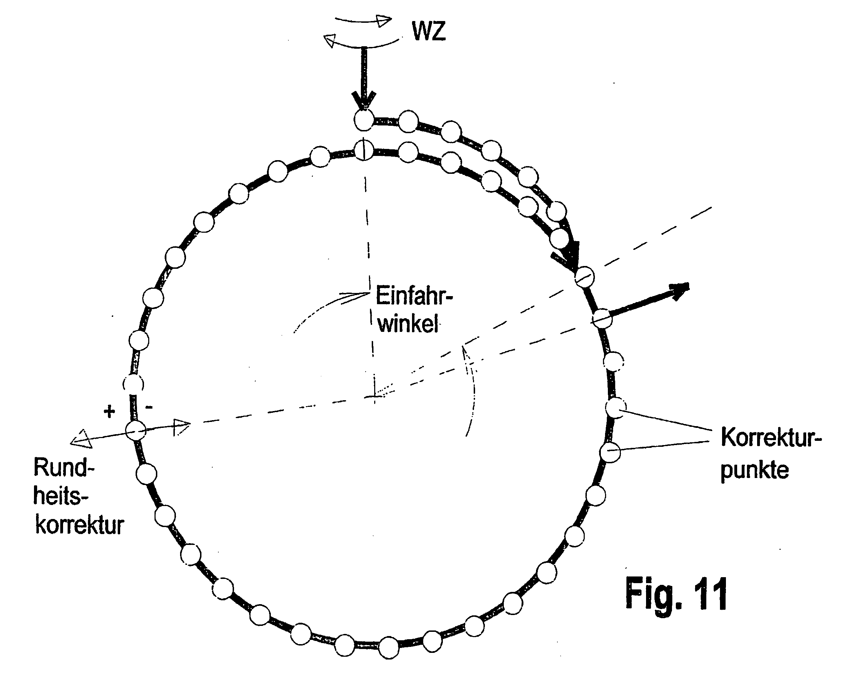

Wie Fig. 11 zeigt, wird auch bei Beginn der Bearbeitung der Mantelfläche z. B. eines Lagerzapfens werkstückschonend wie folgt vorgegangen:

Der Fräser wird trotz der Drehung des Werkstückes relativ langsam bis auf das radiale Sollmaß zugestellt. Eine zu schnelle radiale Zustellung würde nicht nur die Spandicke unzulässig erhöhen, sondern vor allem - wegen der dann großen Spanlänge aufgrund relativ großer Umschlingung zwischen einem scheibenförmigen Außenfräser, der um eine Achse parallel zur Lagerzapfenachse rotiert, und der momentanen Bearbeitungsstelle - auch die hiermit korrelierenden Querkräfte, welche in das Werkstück eingeleitet werden, relativ hoch werden.

Wie Fig. 11 zeigt, wird der Fräser so langsam radial gegen den Mittelpunkt des zu bearbeitenden Lagerzapfens vorwärtsbewegt, daß das vorhandene Aufmaß erst nach einem Einfahrwinkel von ca. 50 - 70, vorzugsweise etwa 60°, des Lagerzapfen-Umfanges durch den Fräser erfaßt ist. Von diesem Punkt ab muß eine vollständige Umdrehung des zu bearbeitenden Lagerzapfens, vorzugsweise etwas mehr, also ca 370°, abgearbeitet werden, um eine optimale Anpassung der Ist-Kontur an die Soll-Kontur des Zapfens zu erreichen. Das Ausfahren des Fräsers kann dann direkt radial erfolgen.

Zusätzlich sind in Fig. 11 entlang der Bearbeitungsbahn Korrekturpunkte mit einem Zwischenwinkel von etwa 10 - 15° zum Mittelpunkt des zu bearbeitenden Hublagerzapfens angeordnet.

Nach dem Herstellen der ersten Stücke einer zu bearbeitenden Serie kann die Annäherung der Ist-Umfangskontur an die Soll-Umfangskontur gemessen werden und durch Abänderung jedes einzelnen der Korrekturpunkte - durch entsprechende Eingabe von Korrekturwerten für die einzelnen Korrekturpunkte in die Maschinensteuerung - die erzielte Ist-Kontur nachträglich empirisch korrigiert werden.

In Fig. 10 ist ferner die Umfangskontur der Wange an einer Stelle eben abgeflacht. Teilweise wird auch die Umfangskontur der Wangenfläche mittels Außenfräsen bearbeitet. Mit dem Außenfräsen gemäß der Erfindung ist - durch entsprechende Steuerung der Drehlage, also der Drehgeschwindigkeit der Kurbelwelle in Relation zur X-Verschiebung des Fräsers - nicht nur jede gewünschte (also nach außen gekrümmte) Kontur erzielbar, sondern auch ebene, z. B. tangential zum Mittellager ML der Kurbelwelle liegende Abflachungen. Derartige ebene Anfräsungen werden entweder zum nachträglichen Befestigen z. B. von Ausgleichsgewichten benötigt, oder auch zum Wuchten der Kurbelwelle direkt in der Aufspannung der spanenden Bearbeitung.

Selbst konkave, also vertiefte, Umfangskonturen, können hergestellt werden, solange deren Krümmungsradius größer ist als der Radius des scheibenförmigen Außenfräsers.

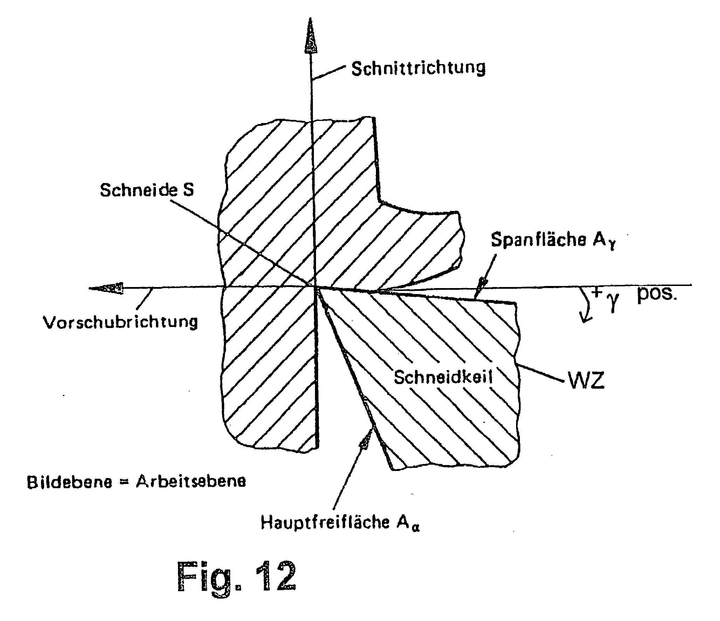

Dabei zeigt Fig. 12 einen Schnitt durch ein spanendes Werkzeug WZ, beispielsweise einen Drehmeißel, wobei die meisten Bezeichnungen und Winkel sowohl für das Drehen, als auch für das Fräsen gelten. Dabei wird die Schneide, beispielsweise die Hauptschneide S, durch die durch die Spanfläche A_{γ} sowie die Hauptfreifläche A_{α} gebildete Kante gebildet, und die Nebenschneide S' durch die Spanfläche A_{γ} und die im Winkel zur Hauptfreifläche A_{α} verlaufende Nebenfreifläche A'_{α}. Die in Fig. 12 spitz gezeichnete Schneide S ist in der Praxis niemals vollständig spitz, sondern muß eine gewisse Rundung, die Schneidkantenverrundung SKV, besitzen, um ein Ausbrechen der Schneidkante zu verhindern.

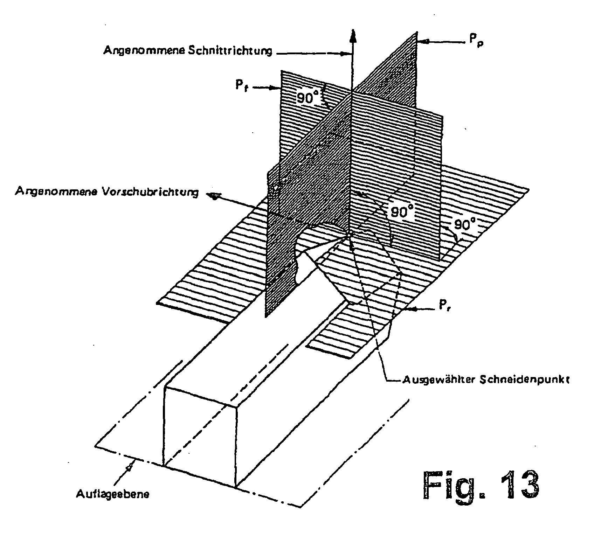

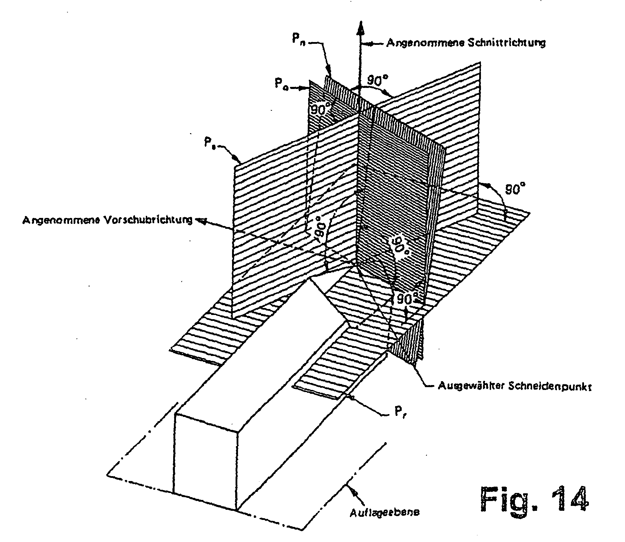

In den Fig. 13 und 14 sind verschiedene Richtungen und Ebenen bezüglich des Werkzeuges definiert.

Dabei ist die Werkzeug-Bezugsebene Pᵣ eine Ebene durch den ausgewählten Schneidenpunkt, und zwar senkrecht zur angenommenen Schnittrichtung. Die Werkzeug-Bezugsebene Pᵣ ist dabei möglichst so gewählt, daß sie parallel oder senkrecht zu einer Achse des Werkzeuges liegt. Eine Festlegung muß für jeden Werkzeugtyp individuell erfolgen. Bei Drehmeißeln ist die Werkzeug-Bezugsebene Pᵣ eine Ebene parallel zur Auflagefläche des Schaftes bei konventionellen Drehmeißeln, bei Fräswerkzeugen eine Ebene, die die Achse des Fräswerkzeuges enthält.

Die angenommene Arbeitsebene P_{f} ist eine Ebene durch den ausgewählten Schneidenpunkt, senkrecht stehend auf der Werkzeug-Bezugsebene Pᵣ und parallel zur angenommenen Vorschubrichtung.

Die Werkzeug-Rückebene Pₚ ist eine Ebene durch den ausgewählten Schneidenpunkt, senkrecht zur Werkzeug-Bezugsebene Pᵣ und senkrecht zur angenommenen Arbeitsebene P_{f}. Pᵣ, Pₚ und P_{f} stellen somit ein Koordinatensystem durch den angenommenen Schneidenpunkt dar.

Die Werkzeug-Schneidenebene Pₛ (siehe Fig. 14) ist eine Ebene durch den Schneidenpunkt, tangential zur Schneide S und senkrecht zur Werkzeugs-Bezugsebene Pᵣ. Wenn die Werkzeugschneide S rechtwinklig zur Vorschubrichtung liegt, fallen Werkzeug-Schneidenebene Pₛ und Werkzeug-Rückebene Pₚ zusammen.

Die Werkzeug-Orthogonalebene P₀ ist eine Ebene durch den Schneidenpunkt, senkrecht zur Werkzeug-Bezugsebene Pᵣ und senkrecht zur Werkzeug-Schneidenebene Pₛ. Wenn somit die Werkzeugschneide S rechtwinklig zur Vorschubrichtung liegt, fallen Werkzeug-Orthogonalebene P₀ und angenommene Arbeitsebene P_{f} zusammen.

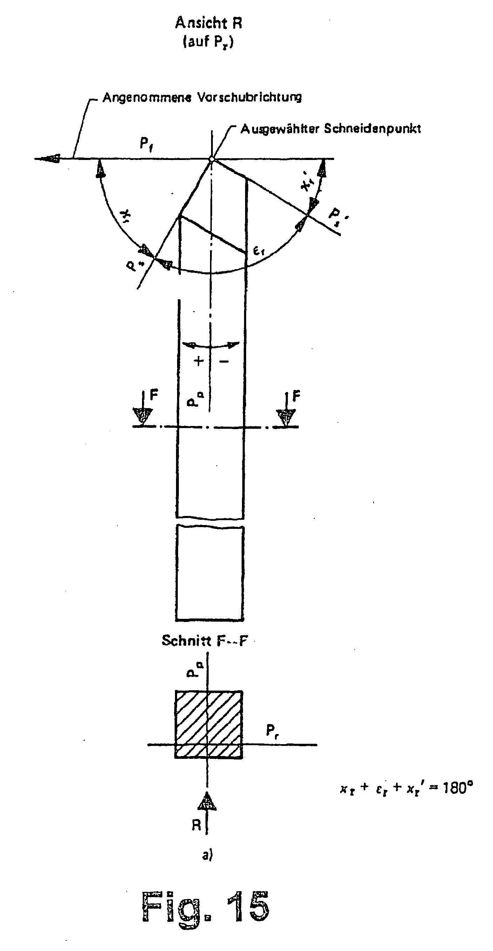

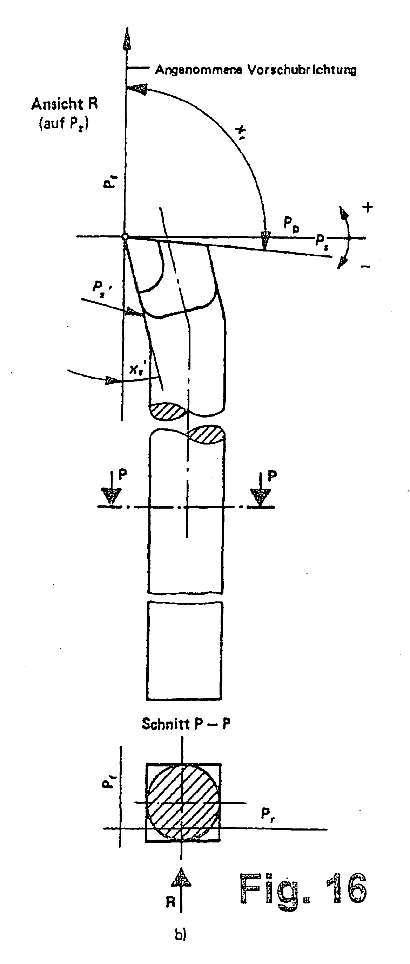

Aus den Figuren 15 und 16 ist - getrennt für das Längsdrehen und das Plandrehen - die Orientierung der einzelnen Werkzeugschneiden zum Werkstück besser ersichtlich. In dieser Aufsicht betrachtet hat das Werkzeug an seiner Schneidenspitze einen Werkzeug-Eckenwinkel εᵣ zwischen der Werkzeug-Schneidenebene Pₛ der Hauptschneide und der Werkzeug-Schneidenebene P'ₛ der Nebenschneide, gemessen in der Werkzeug-Bezugsebene Pᵣ.

Dabei steht die Hauptschneide in einem Werkzeug-Einstellwinkel κᵣ zwischen der Werkzeug-Schneidenebene Pₛ und der angenommenen Arbeitsebene P_{f} gemessen in der Werkzeug-Bezugsebene Pᵣ.

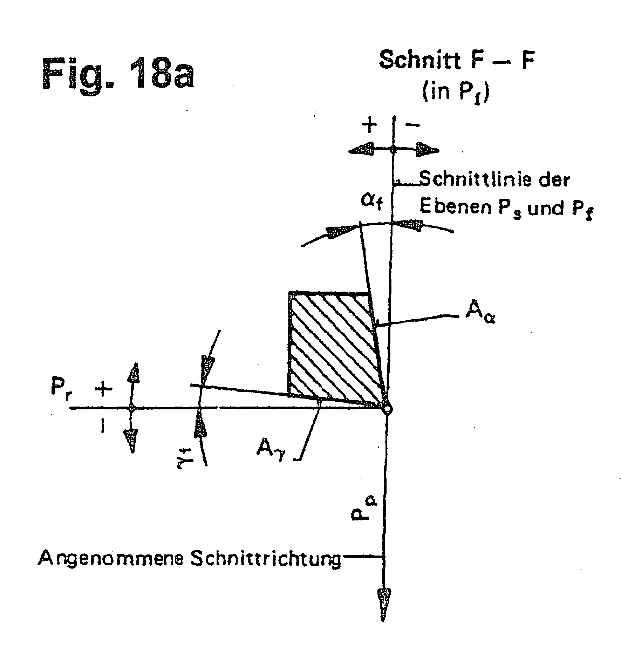

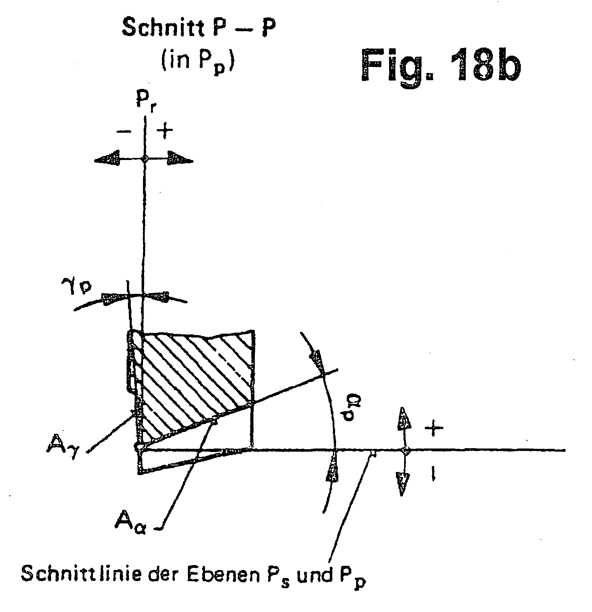

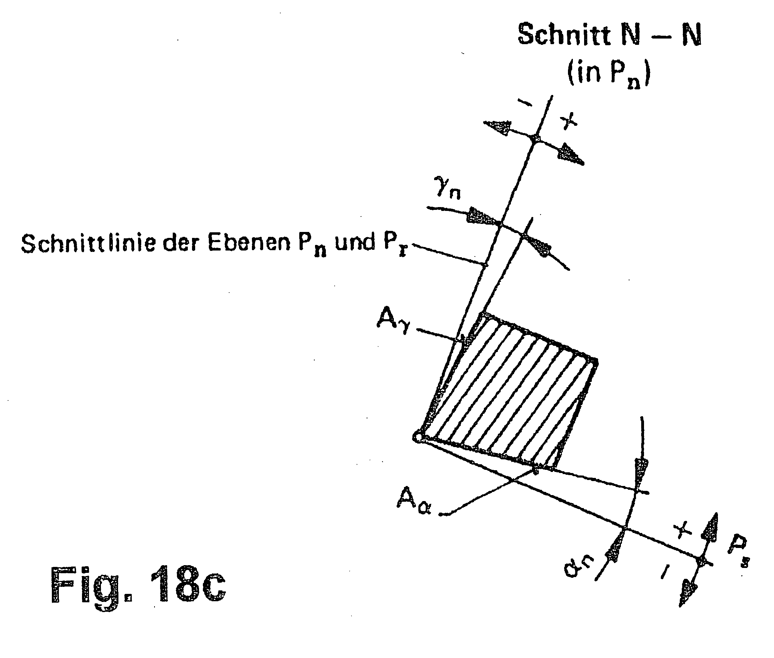

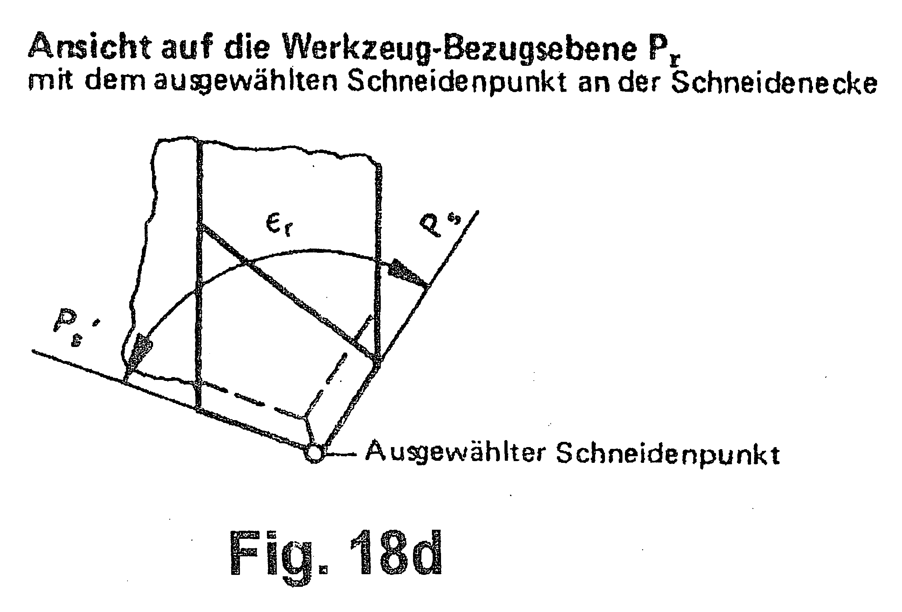

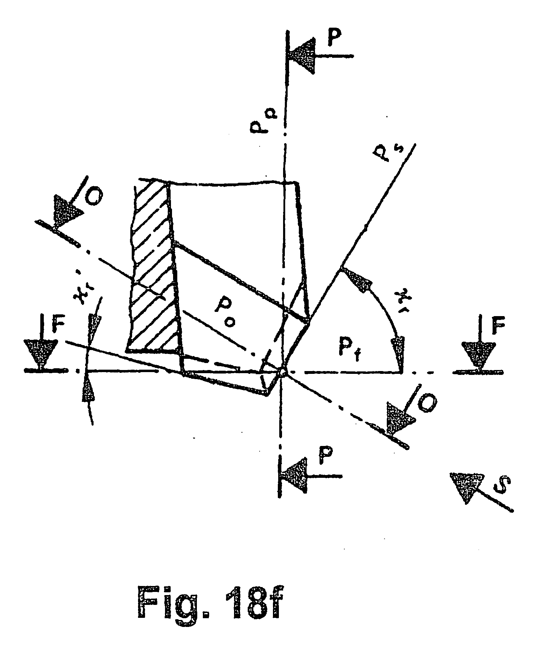

In den Figuren 18a - 18f ist die Lage der einzelnen Schnitte und Ansichten zum Teil aus den Figuren 15 und 16 direkt entnehmbar.

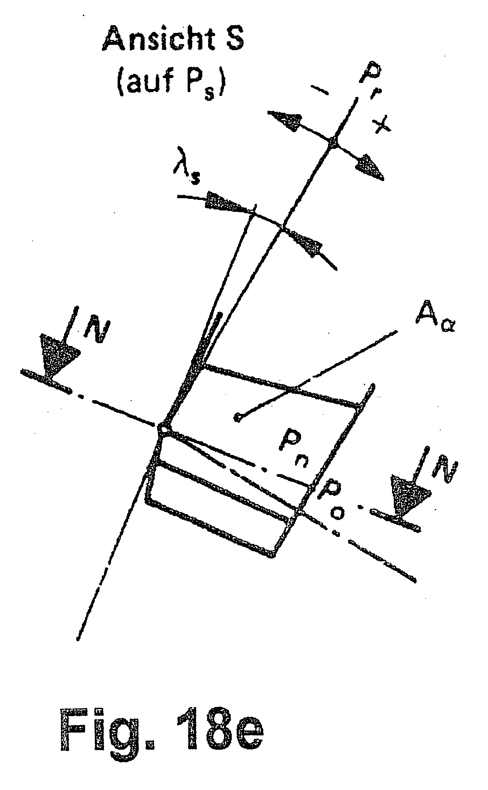

Die relevanten Winkel dabei sind:
- Werkzeug-Seitenspanwinkel γ_{f}: Winkel zwischen der Spanfläche A_{γ} und der Werkzeug-Bezugsfläche Pᵣ, gemessen in der Arbeitsebene P_{f};
- Werkzeug-Rückspanwinkel γₚ: Winkel zwischen der Spanfläche A_{γ} und der Werkzeug-Bezugsebene Pᵣ, gemessen in der Werkzeug-Rückebene Pₚ;
- Werkzeug-Normalspanwinkel γₙ: Winkel zwischen der Spanfläche A_{γ} und der Werkzeug-Bezugsebene Pᵣ, gemessen in der Werkzeug-Schneidennormalebene Pₙ; Der Wert dieses Winkels γₙ (positiv oder negativ) wird verallgemeinert meist als "positive/negative Schneidengeometrie" bezeichnet.
- Werkzeug-Neigungswinkel λₛ (Fig. 18e): Winkel zwischen der Schneide S und der Werkzeug-Bezugsebene Pᵣ, gemessen in der Werkzeug-Schneidenebene Pₛ.

Dieser Werkzeug-Neigungswinkel λₛ ist ein spitzer Winkel, dessen Spitze zur Schneidenecke hinweist. Er ist positiv, wenn die von der Schneidenecke aus zu betrachtende Schneide auf der der angenommenen Schnittrichtung abgekehrten Seite der Werkzeug-Bezugsebene Pᵣ liegt.

Mit α wird generell der Freiwinkel einer Schneide bezeichnet.

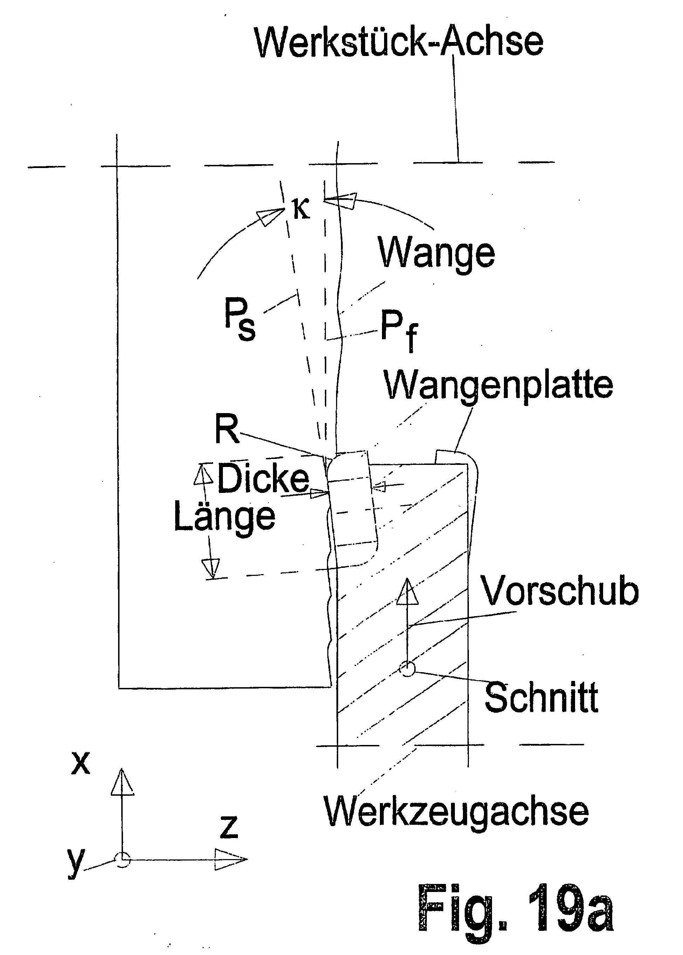

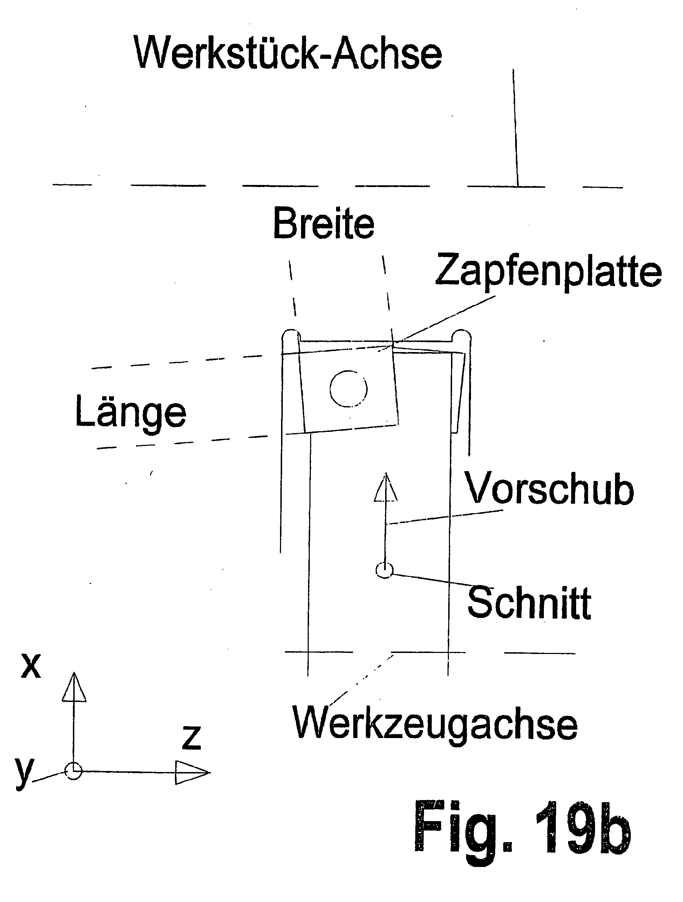

Fig. 19 zeigt eine Wangenplatte, die auf den scheibenförmigen Grundkörper des Fräsers - vorzugsweise beiderseits - stirnseitig aufgeschraubt ist, und dabei sowohl radial als auch stirnseitig über den Grundkörper übersteht. Um von der Stirnfläche der Wange das Material abzutragen, wird bei rotierendem Fräser dieser in X-Richtung, also radial zum Werkstück, als Vorschubrichtung vorwärts bewegt. Dabei steht die plättchenförmige Wangenplatte mit ihrer Ebene, der Werkzeug-Schneidenebene Pₛ im kleinen Winkel κ zur Arbeitsebene P_{f}, die sich aus der Vorschubrichtung (X-Richtung) und der in der X-Y-Ebene liegenden Schnittrichtung zusammensetzt. Dadurch ragt die äußerste, mit dem Eckenradius R von etwa 1,6 mm gerundete Kante des Schneidplättchens vom Grundkörper schräg nach außen und bildet den axial am weitesten vorstehenden Punkt gegenüber dem Grundkörper des Fräsers.

Je größer der Winkel κ ist, um so wellenförmiger wird die bearbeitete Stirnfläche der Wange, wie an dem bereits bearbeiteten Teil in Fig. 19 zu erkennen.

Um die gesamte Stirnfläche einer Wange bearbeiten zu können, ist neben dem in Fig. 19a dargestellten Vorschub in X-Richtung des Fräsers zusätzlich ggf. eine zusätzliche Drehung der Kurbelwelle notwendig, wenn beispielsweise die Wangenfläche bis an den Hublagerzapfen H₂ heran und um diesen herum bearbeitet werden soll.

Bei einer Wangenplatte wie in Fig. 19a dargestellt, wird als Länge der Schneidplatte die Ausdehnung der Platte in radialer Richtung des Fräsergrundkörpers, als Breite die Ausdehnung in tangentialer Richtung des scheibenförmigen Werkzeuggrundkörpers und als Dicke die Ausdehnung in der der axialen Richtung nächstkommenden Richtung des Schneidplättchens bezeichnet.

Fig. 19b zeigt in gleicher Blickrichtung wie Fig. 19a die Bearbeitung der Mantelfläche eines Zapfens der Kurbelwelle durch eine Zapfenplatte. Bei einer derartigen Platte sind als Länge und Breite die in der Aufsicht der Fig. 19b ersichtlichen Seiten gemeint, wobei als Zapfenplatten in der Regel quadratische Wendeschneidplatten verwendet werden, die somit vierfach hintereinander eingesetzt werden können.

Die Zapfenplatten können dabei mit ihrer außen liegenden, schneidenden Kante in einem geringen Winkel abweichend von der Z-Richtung innerhalb der Z-X-Ebene am Grundkörper des Scheibenfräsers befestigt sein, wenn gleichzeitig auch eine Abweichung von der Z-Richtung innerhalb der Z-Y-Ebene gegeben ist.

## Patentansprüche

1. Fräsmaschine zum Bearbeiten von Werkstücken mit zur Einspannung exzentrischen Stirnflächen bzw. Mantelflächen, z. B. von einer Kurbelwelle, mit
- einem Bett (20),
- zwei gegeneinandergerichteten Futtern (21, 22) zur Aufnahme des Werkstückes, von denen wenigstens eines mittels eines Spindelstockes (23) drehend antreibbar und positionierbar (C₁-Achse) ist,
- einem quer zur Z-Achse bewegbaren Werkzeugsupport (25), welcher einen drehend antreibbaren Fräser trägt sowie
- einer Steuerung (35),
wobei
- mehrere Werkzeugsupporte (25, 26) vorhanden sind, welche unabhängig voneinander sowohl hinsichtlich der Drehung ihres Fräsers als auch hinsichtlich der Bewegung in Querrichtung in Abhängigkeit von der Werkstückbewegung steuerbar sind,
- die Steuerung (35) sowohl die Drehung des Werkstückes, als auch die Querbewegung der Werkzeugsupporte (25, 26) und Drehung der Fräser steuert, und
- die Linearführungen in X-Richtung für die beiden Werkzeugsupporte (25, 26) in Z-Richtung fluchtend hintereinander liegen.

2. Fräsmaschine nach Anspruch 1,
**dadurch gekennzeichnet, daß**
die Futter (21, 22) zur Aufnahme einer Kurbelwelle (1) als Werkstück an dem stirnseitigen Endzapfen einerseits und dem stirnseitigen Endflansch andererseits ausgebildet sind, und insbesondere beim Bearbeiten von Kurbelwellen die Kurbelwelle in den Futtern (21, 22) auf ihrer Mittelachse, also der Achse der Mittellager (ML) gespannt ist.

3. Fräsmaschine nach einem der vorhergehenden Ansprüche,
**dadurch gekennzeichnet, daß**
die Steuerung (35) die Drehung der Fräser und Querbewegung der Werkzeugsupporte (25, 26) in Abhängigkeit der aktuellen Bewegung bzw. Positionierung des Werkstückes steuert, und/oder die Steuerung (35) die Eingabe von mehreren über den Umfang einer herzustellenden zylindrischen Mantelfläche angeordneten Korrekturwerte ermöglicht.

4. Fräsmaschine **nach einem der Ansprüche 2 - 3,**
**dadurch gekennzeichnet**, d a ß
der Fräser ein Außenfräser ist, insbesondere der Außenfräser ein um eine zur Z-Achse parallele Achse drehender Scheibenfräser (5, 6), mit Schneiden an seinem Umfangsbereich sowie im Übergangsbereich zwischen seinem Außenumfang und seiner Stirnfläche, oder der Außenfräser ein Fingerfräser (37) ist, welcher quer zur Z-Achse gegen das Werkstück gerichtet ist, wobei insbesondere der Fingerfräser (37) schwenkbar um eine parallel zur Z-Achse verlaufende C₃-Achse ist.

5. Fräsmaschine nach einem der vorhergehenden Ansprüche,
**dadurch gekennzeichnet, daß**
wenigstens einer der Supporte (25, 26) in der Z-Richtung verfahrbar ist, und insbesondere die Steuerung (35) auch die Verfahrbarkeit der Werkzeugsupporte (25, 26) in Z-Richtung steuert.

6. Fräsmaschine nach einem der vorhergehenden Ansprüche,
**dadurch gekennzeichnet, daß**
die Drehzahl des Scheibenfräsers (5, 6) ein Mehrfaches, insbesondere mehr als das Zehnfache, der Drehzahl des Werkstückes beträgt, und/oder die Drehzahl des Werkstückes kleiner als 60, vorzugsweise kleiner als 30 U/min beträgt.

7. Fräsmaschine nach einem der vorhergehenden Ansprüche,
**dadurch gekennzeichnet, daß**
die Schneiden des Fräsers eine positive Schneidengeometrie aufweisen.

8. Fräsmaschine nach einem der vorhergehenden Ansprüche,
**dadurch gekennzeichnet, daß**
die Fräsmaschine (2) Werkzeugsupporte (25, 26) umfaßt, welche oberhalb der Spindelstock-Achse (MA) angeordnet sind.

9. Fräsmaschine nach einem der vorhergehenden Ansprüche,
**dadurch gekennzeichnet, daß**
die Linearführungen in X-Richtung für die beiden Werkzeugsupporte (25, 26) unter einem Winkel von weniger als 45° gegenüber der Mittelebene (ME) angeordnet ist.

10. Fräsmaschine nach einem der vorhergehenden Ansprüche,
**dadurch gekennzeichnet, daß**
die Fräsmaschine vier Werkzeugsupporte (25, 26, 25', 26') aufweist, von denen die Werkzeugsupporte (25, 26) bezüglich der Spindelstockachse nicht fluchtend, insbesondere gegenüber von den Werkzeugsupporten (25', 26') angeordnet sind, und insbesondere die Bewegungsrichtung des Werkzeugsupportes (25) in X-Richtung mit der des gegenüberliegenden Werkzeugsupportes (25') fluchtet.

11. Fräsmaschine nach einem der vorhergehenden Ansprüche,
**dadurch gekennzeichnet, daß**
zur Abstützung der Kurbelwelle in deren mittleren Bereich während der Bearbeitung auf dem Bett (25) eine Lünette angeordnet ist, welche wenigstens drei Kontaktplatten zur Anlage an einem Mittellager (ML) der Kurbelwelle aufweist und an diesem gleitend anliegen, insbesondere die Kontaktplatten aus kubischem Bornitrit (CBN) bestehen.

12. Fräsmaschine nach einem der vorhergehenden Ansprüche,
**dadurch gekennzeichnet, daß**
die Bewegungsbahn des Mittelpunktes des Scheibenfräsers (5, 6) in Querrichtung nicht durch die Spindelachse verläuft, insbesondere bei einer Schrägstellung der Bewegungsrichtung gegenüber der Mittelebene (ME) von weniger als 90° oberhalb der Spindelachse verläuft.

## Claims

1. Milling machine for machining workpieces having eccentric end faces or peripheral surfaces, e.g. of a crankshaft, which are adapted for clamping, comprising
- a bed (20),
- two opposed chucks (21, 22) for receiving the workpiece, of which at least one can be rotatably driven and positioned (C₁-axis) by means of a headstock (23),
- a tool support (25) movable transversely to the Z-axis, which carries a rotatably driven milling cutter as well as
- a control (35),
wherein
- a plurality of tool supports (25, 26) is provided, which are controllable independently of each other both with regard to the rotation of their milling cutter and with regard to the movement in the transverse direction depending on the movement of the workpiece and
- the control (35) controls both the rotation of the workpiece and the transverse movement of the tool supports (25, 26) as well as the rotation of the milling cutters, and
- the linear guides for the two tool supports (25, 26) in the X-direction are arranged in alignment one after another with respect to the Z-direction.

2. Milling machine according to claim 1,
**characterized in that**
the chucks (21, 22) are formed on the end pin on the face on one side and on the end flange on the face on the other side for receiving a crankshaft (1) as workpiece and that in particular during the machining of crankshafts the crankshaft is clamped in the chucks (21, 22) on its centre axis, hence the axis of the centre bearings (ML).

3. Milling machine according to any one of the preceding claims,
**characterized in that**
the control (35) controls the rotation of the milling cutters and the transverse movement of the tool supports (25, 26) depending on the actual movement or positioning of the workpiece, and/or that the control (35) allows the input of a plurality of corrective values arranged over the circumference of a cylindrical peripheral surface to be manufactured.

4. Milling machine according to any one of claims 2 to 3,
**characterized in that**
the milling cutter is an external milling cutter, the external milling cutter being in particular a side-milling cutter (5, 6) rotating about an axis parallel to the Z-axis, with cutting edges disposed on its circumferential area as well as on the transitional area between its outer circumference and its end face, or the external milling cutter being an end-milling cutter (37), which is directed transversely to the Z-axis opposed to the workpiece, wherein in particular the end-milling cutter (37) is pivoted about a C₃-axis extending parallel to the Z-axis.

5. Milling machine according to any one of the preceding claims,
**characterized in that**
at least one of the supports (25, 26) is movable in the Z-direction and that in particular the control (35) also controls the movability of the tool supports (25, 26) in the Z-direction.

6. Milling machine according to any one of the preceding claims,
**characterized in that**
the rotational speed of the side-milling cutter (5, 6) is a multiple, in particular more that the tenfold, of the rotational speed of the workpiece, and/or that the rotational speed of the workpiece is smaller than 60, preferably smaller than 30 revs/min.

7. Milling machine according to any one of the preceding claims,
**characterized in that,**
the cutting edges of the milling cutter have a positive cutting edge geometry.

8. Milling machine according to any one of the preceding claims,
**characterized in that**
the milling machine (2) comprises tool supports (25, 26), which are arranged above the headstock axis (MA).

9. Milling machine according to any one of the preceding claims,
**characterized in that**
the linear guides in the X-direction for the two tool supports (25, 26) are arranged at an angle of less than 45 ° with respect to the centre plane (ME).

10. Milling machine according to any one of the preceding claims,
**characterized in that**
the milling machine has four tool supports (25, 26, 25', 26'), of which the tool supports (25, 26) are not arranged in alignment with respect to the headstock axis, in particular arranged opposite the tool supports (25', 26'), and that in particular the direction of motion of the tool support (25) is in alignment in the X-direction with that of the opposite tool support (25').

11. Milling machine according to any one of the preceding claims,
**characterized in that**
a backrest is arranged on the bed (25) for supporting the crankshaft in its central area during the machining, which backrest has at least three contact plates for resting against a centre bearing (ML) of the crankshaft, against which they slidingly rest, that in particular the contact plates consist of cubic boronitrite (CBN).

12. Milling machine according to any one of the preceding claims,
**characterized in that**
the motion path of the centre of the side-milling cutter (5, 6) does not extend through the headstock axis in the transverse direction, but extends above the headstock axis in particular at an inclined position of the direction of motion with respect to the centre plane (ME) of less than 90°.

## Revendications

1. Fraiseuse pour l'usinage de pièces à usiner comprenant des surfaces frontales respectivement des surfaces d'enveloppe excentriques pour le serrage, par exemple d'un vilebrequin, avec
- un banc (20)
- deux mandrins (21, 22) opposés pour le logement d'outils d'au moins l'un est positionnable (axe C1) et peut être entraîné au moyen d'une poupée porte-fraise (23),
- d'un porte-outils (25) mobile transversalement à l'axe Z porte-outils qui porte une fraise entraînée en rotation ainsi
- qu'une commande (35)
où
- plusieurs porte-outils (25, 26) sont prévus qui peuvent être commandés en fonction du mouvement de la pièce à usiner indépendamment l'un de l'autre autant par rapport à la rotation de leur fraise que par rapport au mouvement dans le sens transversal et
- la commande (35) pilote aussi bien la rotation de la pièce à usiner que le déplacement transversal des porte-outils (25, 26) et la rotation de la fraise,
et
- les guides linéaires dans la direction X pour les deux porte-outils (25, 26) sont placés alignés l'un derrière l'autre dans la direction Z.

2. Fraiseuse selon la revendication 1, **caractérisée en ce que** les mandrins (21, 22) sont aménagés pour le logement d'un vilebrequin (1) en tant que pièce à usiner sur le tourillon d'extrémité en face avant d'une part et sur la bride d'extrémité en face avant d'autre part, et en particulier lors de l'usinage de vilebrequins, le vilebrequin est serré dans les mandrins (21, 22) sur leur axe médian donc sur l'axe du palier médian (ML).

3. Fraiseuse selon l'une des revendications précédentes, **caractérisée en ce que** la commande (35) commande la rotation des fraises et le déplacement transversal des porte-outils (25, 26) en fonction du déplacement actuel respectivement du positionnement de la pièce à usiner et/ou la commande (35) permet la saisie de plusieurs valeurs correctrices réparties sur la périphérie d'une surface d'enveloppe cylindrique à fabriquer.

4. Fraiseuse selon l'une des revendications 2 - 3, **caractérisée en ce que** la fraise est une fraise de profilage, en particulier la fraise de profilage est une fraise à disque (5, 6) rotative autour d'un axe parallèle à l'axe Z,, avec des lames sur sa zone périphérique ainsi que dans la zone de transition entre sa périphérie externe et sa surface frontale ou bien la fraise de profilage est une fraise à queue (37) qu est orientée transversalement à l'axe Z en direction de la pièce à usiner, en particulier la fraise à queue (37) est pivotante autour d'un axe C3 s'étendant parallèlement à l'axe Z.

5. Fraiseuse selon l'une des revendications précédentes, **caractérisée en ce qu'**au moins l'un des porte-outils (25, 26) est mobile dans la direction Z et en particulier la commande (35) commande également la mobilité des porte-outils (25, 26) dans la direction Z.

6. Fraiseuse selon l'une des revendications précédentes, **caractérisée en ce que** le nombre de tours de la fraise à disque (5, 6) est un multiple en particulier plus de 10 fois le nombre de tours de la pièce à usinier et/ou le nombre de tours de la pièce à usiner est inférieure à 60 de préférence inférieure à 30 t/min.

7. Fraiseuse selon l'une des revendications précédentes, **caractérisée en ce que** les lames de la fraise présentent une géométrie positive de coupe.

8. Fraiseuse selon l'une des revendications précédentes, **caractérisée en ce que** la fraiseuse (2) comprend des porte-outils (25, 26) qui sont disposés au-dessus de l'axe de poupée porte-fraise (MA).

9. Fraiseuse selon l'une des revendications précédentes, **caractérisée en ce que** les guides linéaires dans la direction X pour les deux porte-outils (25, 26) sont disposés en formant un angle inférieur à 45° par rapport au plan médian (ME).

10. Fraiseuse selon l'une des revendications précédentes, **caractérisée en ce que** la fraiseuse présente quatre porte-outils (25, 26, 25', 26') dont les porte-outils (25, 26) ne sont pas disposés en alignement par rapport à l'axe de poupée porte-fraise, en particulier à l'opposé des porte-outils (25', 26'), et en particulier le sens de déplacement du porte-outils (25) est aligné avec le porte-outils opposé (25') dans la direction X.

11. Fraiseuse selon l'une des revendications précédentes, **caractérisée en ce que** pour soutenir le vilebrequin dans la zone médiane pendant l'usinage sur le banc (25), il est disposé une lunette qui présente au moins trois plaques de contact venant s'appliquer contre un palier médian (ML) du vilebrequin et qui sont appliquées contre ce dernier en glissant, en particulier les plaques de contact se composent de nitrure de bore cubique (CBN).

12. Fraiseuse selon l'une des revendications précédentes, **caractérisée en ce que** la trajectoire de déplacement du point médian de la fraise à disque (5, 6) ne s'étend pas en sens transversal à travers l'axe de poupée porte-fraise en particulier en cas de position inclinée de la direction de déplacement s'étend vis-à-vis du plan médian (ME) de moins de 90° au-dessus de l'axe de poupée.
